# EUROPÄISCHE PATENTSCHRIFT

(11) **EP 2 703 687 B1**
(45) Veröffentlichungstag und Bekanntmachung des Hinweises auf die Patenterteilung: **08.05.2019**
(21) Anmeldenummer: 13188109.6
(22) Anmeldetag: 03.03.2011
(51) Int. Cl.: F16F 15/12, F16F 15/131, F16H 45/02, F16F 15/14

(54) **Hybridantriebsmodul**
Hybrid drive module
Module d'entraînement hybride

(30) Priorität: 25.05.2010 DE 102010029255
(43) Veröffentlichungstag der Anmeldung: 05.03.2014
(62) Teilanmeldung aus: 11709050.6
(73) Patentinhaber: ZF Friedrichshafen AG, 88046 Friedrichshafen (DE)
(72) Erfinder: Dögel, Thomas, 97720 Nüdlingen (DE)

(56) Entgegenhaltungen:
- DE-A1- 19 943 038
- US-A1- 2002 033 310
- US-A1- 2005 133 328

## Beschreibung

Die vorliegende Erfindung betrifft ein Hybridantriebsmodul, wie es beispielsweise im Antriebsstrang eines Fahrzeugs eingesetzt werden kann.

Vor allem bei mit Brennkraftmaschinen aufgebauten Antriebssträngen kann bedingt dadurch, dass in Brennkraftmaschinen periodisch Zündungen auftreten und die dabei freigesetzte Energie in eine Drehbewegung der Kurbelwelle umgesetzt wird, grundsätzlich kein konstantes Drehmoment in einen Antriebsstrang eingeleitet werden. Sowohl das von der Kurbelwelle abgegebene Drehmoment, als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese so weit als möglich zu eliminieren.

Beispielsweise ist es bekannt, durch den Einsatz von Kraft- bzw. Energiespeichern, also beispielsweise Federn oder sich bewegende Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentenverlauf erreicht werden kann. Aus der Offenlegungsschrift DE 199 43 038 A1 ist ein Antriebssystem mit einer Elektromaschine, einer Brennkraftmaschine, sowie einer Torsionsschwingungsdämpferanordnung bekannt, dessen Ausgangsbereich drehfest mit einem Schwungrad verbunden ist. Weiter zeigt die Offenlegungsschrift US 2005/133328 A1 ebenfalls ein Hybridsystem, bestehend aus einem Elektromotor und einem Verbrennungsmotor, sowie ebenfalls einen Torsionsschwingungsdämpfer in Kombination mit einem Drehmomentwandler, wobei der Ausgang des Torsionsschwingungsdämpfers drehfest mit einer Getriebeeingangswelle verbunden ist. Als drehzahladaptive Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können selbstverständlich mit durch Einsatz von Federn oder dergleichen schwingenden Massensystemen kombiniert werden.

Auf Grund der im modernen Fahrzeugbau immer beengter werdenden Platzverhältnisse steht auch für die zur Schwingungsdämpfung eingesetzten Systeme weniger Bauraum mit entsprechenden Einbußen in der Entkopplungsgüte, also der Verringerung der auftretenden Drehungleichförmigkeiten, zur Verfügung.

Es ist die Aufgabe der vorliegenden Erfindung, ein Hybridantriebsmodul, insbesondere für einen Antriebsstrang eines Fahrzeugs bereitzustellen, welches eine verbesserte Verringerung von in einen Antriebsstrang eingeleiteten Drehungleichförmigkeiten erreicht.

Erfindungsgemäß wird diese Aufgabe gelöst durch ein Hybridantriebsmodul, umfassend eine Elektromaschine mit einer Statoranordnung und einer mit einer Drehschwingungsdämpfungsanordnung gekoppelten Rotoranordnung, wobei die Drehschwingungsdämpfungsanordnung einen Eingangsbereich und einen Ausgangsbereich umfasst, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei die Drehschwingungsdämpfungsanordnung ferner wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, wobei der Ausgangsbereich ein weiteres Schwingungssystem mit einer Primärseite und einer gegen die Wirkung einer Federanordnung bezüglich der Primärseite drehbaren Sekundärseite umfasst.

Bei dem erfindungsgemäßen Hybridantriebsmodul wird durch Einsatz der Phasenschieberanordnung dafür gesorgt, dass zunächst durch Aufteilung und dann wieder Zusammenführung des übertragenen Drehmoments durch die dabei eingeführte Phasenverschiebung eine destruktive Überlagerung von Schwingungsanteilen in dem zu übertragenden Drehmoment auftritt. Im Idealfalle findet zumindest in einem besonders kritischen Frequenzbereich eine nahezu vollständige Eliminierung der Drehungleichförmigkeiten statt.

Dabei kann beispielsweise vorgesehen sein, dass die Rotoranordnung an den Eingangsbereich der Drehschwingungsdämpfungsanordnung angekoppelt ist. Dies bedeutet also, dass bei Bereitstellung eines Unterstützungsdrehmomentes oder des gesamten Antriebsdrehmomentes durch elektromagnetische Wechselwirkung zwischen der Rotoranordnung und der Statoranordnung dieses Drehmoment im Drehmomentenfluss vor der Drehschwingungsdämpfungsanordnung eingeleitet und somit über diese geleitet wird.

Bei einer alternativen Ausgestaltungsvariante wird vorgeschlagen, dass die Rotoranordnung an den Ausgangsbereich der Drehschwingungsdämpfungsanordnung angekoppelt ist. Dies bedeutet, dass im Drehmomentenfluss das durch die Rotoranordnung eingeleitete Drehmoment nach der Drehschwingungsdämpfungsanordnung in den Antriebsstrang eingeleitet wird, also nicht über die Drehschwingungsdämpfungsanordnung in Richtung Getriebe weitergeleitet wird.

Um diese Phasenverschiebung bei baulich einfacher Weise effizient erreichen zu können, wird vorgeschlagen, dass die Phasenschieberanordnung ein Schwingungssystem mit einer Primärseite und einer gegen die Wirkung einer Federanordnung bezüglich der Primärseite um die Drehachse drehbaren Sekundärseite umfasst.

Die Phasenschieberanordnung ist somit im Wesentlichen nach dem Funktionsprinzip eines Zweimassenschwingers aufgebaut, bei welchem zwei gegen die Wirkung der Federanordnung bezüglich einander schwingende Massen, also im Wesentlichen die Primärseite und die Sekundärseite, durch Auswahl der Federsteifigkeit einerseits und der Massenverhältnisse bzw. der Massenträgheit an der Primärseite und der Sekundärseite andererseits mit einem gewünschten Schwingungsverhalten bereitgestellt werden. Charakteristisch ist, dass ein derartiges Schwingungssystem eine Resonanzfrequenz aufweist. Im Frequenzbereich unter der Resonanzfrequenz schwingt ein derartiges Schwingungssystem unterkritisch, d.h. Anregung und Reaktion des Systems treten im Wesentlichen gleichzeitig auf. Mit Überschreiten der Resonanzfrequenz tritt ein Phasensprung auf, so dass im Wesentlichen Anregung und Reaktion des Systems zueinander phasenverschoben auftreten, das System also überkritisch arbeitet. Diesen Phasensprung, der im Idealfalle bei einem Maximalwert von 180° liegt, nutzt die vorliegende Erfindung, um durch Überlagerung des so phasenverschobenen Drehmomentenschwingungsanteils mit dem nicht phasenverschobenen Drehmomentenschwingungsanteil die gewünschte Minderung der Drehungleichförmigkeiten zu erreichen.

Gemäß einem besonders vorteilhaften Aspekt wird vorgeschlagen, dass eine um eine Drehachse drehbare, mit Fluid gefüllte oder füllbare und wenigstens die Kopplungsanordnung umschließende Gehäuseanordnung vorgesehen ist. Durch das Integrieren wenigstens der Kopplungsanordnung in eine mit Fluid gefüllte oder füllbare Gehäuseanordnung wird die Möglichkeit geschaffen, durch das Fluid und den durch dieses eingeführten Schmiereffekt, insbesondere dann, wenn das Fluid Öl ist, den Verschleiß insbesondere im Bereich der Kopplungsanordnung zu mindern. Auch kann ein Einfluss auf das Dämpfungsverhalten genommen werden, da sich bewegende Komponenten entgegen dem Widerstand des Fluids zu bewegen sind und dabei Energie dissipiert wird. Dabei kann die Gehäuseanordnung wenigstens einen Teil der Phasenschieberanordnung umschließen oder/und wenigstens ein Teil der Phasenschieberanordnung außerhalb der Gehäuseanordnung angeordnet sein.

Um dabei den Drehmomentenfluss wahlweise unterbrechen bzw. herstellen zu können, wird vorgeschlagen, dass eine mit der Gehäuseanordnung um die Drehachse drehbare erste Reibflächenformation und eine mit der ersten Reibflächenformation in Reibeingriff bringbare und mit dem Abtriebsorgan um die Drehachse drehbare zweite Reibflächenformation vorgesehen sind.

Das Abtriebsorgan kann beispielsweise eine mit einer Abtriebswelle, vorzugsweise Getriebeeingangswelle zur gemeinsamen Drehung um die Drehachse gekoppelte oder koppelbare Abtriebsnabe umfassen.

Die Versorgung der Gehäuseanordnung mit Fluid kann beispielsweise dadurch sichergestellt werden, dass die Gehäuseanordnung eine Antriebsformation zum Antreiben einer Fluidpumpe zum Fördern von Fluid in die Gehäuseanordnung umfasst. Immer dann, wenn die Gehäuseanordnung zur Drehung um die Drehachse angetrieben wird, kann auf diese Art und Weise auch eine Fluidpumpe aktiviert werden und somit sichergestellt werden, dass im Betrieb die Gehäuseanordnung ausreichend mit Fluid gefüllt ist.

Bei einer baulich sehr einfachen, kompakt zu realisierenden Ausgestaltungsvarianten wird vorgeschlagen, dass die Kopplungsanordnung eine Planetengetriebeanordnung umfasst. Hierzu kann beispielsweise vorgesehen sein, dass die Planetengetriebeanordnung einen an den zweiten Drehmomentübertragungsweg angebundenen Planetenradträger mit einer Mehrzahl von daran drehbar getragenen Planetenrädern umfasst. Es sei hier darauf hingewiesen, dass die Planetenräder als im Wesentlichen kreisrunde, also mit voll umlaufender Verzahnung ausgebildete Räder ausgebildet sein können, oder alternativ aber auch als Segmenträder ausgebildet sein können.

Um die Planetengetriebeanordnung bzw. deren Planetenräder zur Zusammenleitung der über die beiden Drehmomentübertragungswege geleiteten Drehmomente bzw. Drehmomentanteile in einfacher Weise nutzen zu können, wird vorgeschlagen, dass die Planetengetriebeanordnung eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern umfasst.

Eine Beeinflussung der über die beiden Drehmomentübertragungswege zu übertragenden Drehmomente bzw. Drehmomentanteile kann dadurch erfolgen, dass die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Die erste Koppelradanordnung und die zweite Koppelradanordnung können jeweils als Hohlradanordnung ausgebildet sein, also mit den Planetenrädern in deren radial äußeren Bereich zusammenwirken. Alternativ kann vorgesehen sein, dass die erste Koppelradanordnung und die zweite Koppelradanordnung jeweils eine Sonnenradanordnung umfasst.

Zur weiteren Beeinflussung des Schwingungsdämpfungsverhaltens kann vorgesehen sein, dass das Schwingungssystem oder/und das weitere Schwingungssystem wenigstens zwei zueinander seriell angeordnete Schwingungsdämpfer jeweils mit einer Primärseite und einer bezüglich dieser drehbaren Sekundärseite umfasst. Alternativ oder zusätzlich kann vorgesehen sein, dass das Schwingungssystem oder/und das weitere Schwingungssystem wenigstens zwei zueinander parallel wirksame Schwingungsdämpfer jeweils mit einer Primärseite und einer bezüglich dieser drehbaren Sekundärseite umfasst.

Wenn das Schwingungssystem oder/und das weitere Schwingungssystem eine drehzahladaptive Schwingungsdämpfungsanordnung mit wenigstens einer in Umfangsrichtung aus einer Grundlage auslenkbaren und dabei ihren Abstand zur Drehachse verändernde Auslenkungsmasse umfasst, wird es weiter möglich, das Schwingungsdämpfungsverhalten an spezielle Anregungsfrequenzen bzw. Ordnungen derselben anzupassen.

Bei einer alternativen Ausgestaltungsvariante kann dies dadurch erreicht werden, dass das Schwingungssystem oder/und das weitere Schwingungssystem eine Festfrequenz-Schwingungsdämpfungsanordnung mit wenigstens einer gegen die Wirkung einer Rückstellfederanordnung auslenkbaren Schwingungsmasse umfasst.

Weiter kann das Schwingungsdämpfungsverhalten dadurch vorteilhaft beeinflusst werden, dass dem Schwingungssystem oder/und dem weiteren Schwingungssystem eine einer Relativdrehung zwischen Primärseite und Sekundärseite desselben entgegenwirkende Reibungsdämpfungsanordnung zugeordnet ist.

Die vorliegende Erfindung wird nachfolgend mit Bezug auf die beiliegenden Figuren detailliert beschrieben. Es zeigt:
Fig. 1 in prinzipartiger Darstellung ein Teil-Längsschnitt eines nicht erfindungsgemäßen Hybridantriebsmoduls;
Fig. 2 eine Teil-Längsschnittansicht einer nasslaufenden Kupplungsanordnung mit einer nicht erfindungsgemäßen Drehschwingungsdämpfungsanordnung;
Fig. 3 eine der Fig. 1 entsprechende Darstellung einer alternativen Ausgestaltungsart, die nicht erfindungsgemäß ist;
Fig. 4 eine der Fig. 1 entsprechende Darstellung einer alternativen Ausgestaltungsart, die nicht erfindungsgemäß ist;
Fig. 5 eine erfindungsgemäße Darstellung;
Fig. 6 eine Teil-Längsschnittdarstellung eines dem Aufbauprinzip der Fig. 5 entsprechenden Hybridantriebsmoduls;
Fig. 7 eine alternative Ausgestaltungsart;
Fig. 8 eine der Fig. 1 entsprechende Darstellung einer alternativen Ausgestaltungsart, die nicht erfindungsgemäß ist;
Fig. 9 eine der Fig. 1 entsprechende Darstellung einer alternativen Ausgestaltungsart, die nicht erfindungsgemäß ist;
Fig. 10 eine erfindungsgemäße alternative Ausgestaltungsart;
Fig. 11 eine erfindungsgemäße alternative Ausgestaltungsart;
Fig. 12 eine erfindungsgemäße alternative Ausgestaltungsart;
Fig. 13 eine Teil-Längsschnittdarstellung eines dem Aufbauprinzip der Fig. 12 entsprechenden Hybridantriebsmoduls;
Fig. 14 eine erfindungsgemäße alternative Ausgestaltungsart;
Fig. 15 eine Teil-Längsschnittansicht eines dem Aufbauprinzip der Fig. 14 entsprechenden Hybridantriebsmoduls.

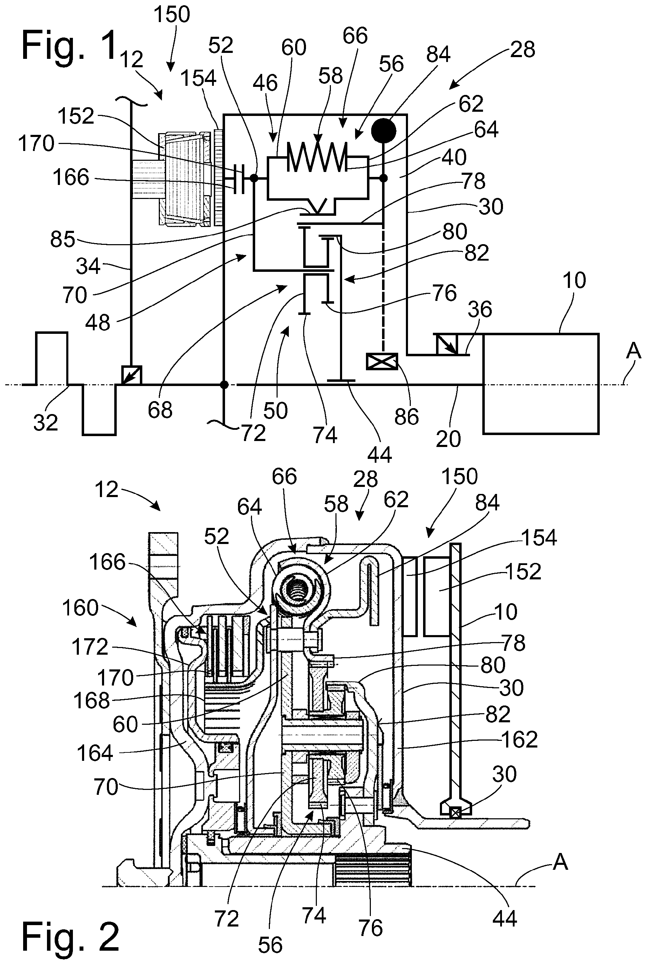

Ein in Fig. 1 dargestelltes Hybridantriebsmodul 12 umfasst ein Gehäuse 30, welches antriebsseitig an eine Antriebswelle 32, beispielsweise die Kurbelwelle einer nur schematisch angedeuteten Brennkraftmaschine 34, angekoppelt bzw. ankoppelbar ist. Durch diese Kopplung ist das Gehäuse 30 zusammen mit dieser Antriebswelle 32 um eine Drehachse A drehbar, welche z. B. auch der Drehachse der Getriebeeingangswelle 20 entspricht.

An der einem Getriebe 10 zugewandten Seite weist das Gehäuse 30 eine eine Getriebeölpumpe antreibende Pumpenantriebsnabe 36 auf. Durch Rotation des Gehäuses 30 kann somit, ähnlich wie auch bei einem hydrodynamischen Drehmomentwandler, diese getriebeinterne Fluidpumpe aktiviert werden, und es kann Fluid in den Innenraum 40 des Gehäuses 30 gefördert bzw. daraus auch wieder abgezogen werden.

Eine Elektromaschine 150 des Hybridantriebsmoduls 12 umfasst eine Statoranordnung 152, die beispielsweise an einem Motorgehäuse der Brennkraftmaschine 34 festgelegt sein kann und elektrisch erregbare Wicklungen umfasst. Die Statoranordnung 152 liegt im radialen Erstreckungsbereich des Gehäuses 30, und an diesem ist der Statoranordnung 152 axial gegenüberliegend eine Rotoranordnung 154 vorgesehen. Diese kann eine Mehrzahl von in Umfangsrichtung aufeinander folgend angeordneten Permanentmagneten umfassen. Die Rotoranordnung 154 kann an dem Gehäuse 30 beispielsweise durch Verklebung, Verschraubung, Vernietung oder in sonstiger Weise festgelegt sein.

Eine Drehschwingungsdämpfungsanordnung 28 umfasst im Innenraum 40 des Gehäuses 30 ein Abtriebsorgan 44, welches zur gemeinsamen Drehung mit der Getriebeeingangswelle 20 mit dieser gekoppelt oder koppelbar ist, beispielsweise durch Verzahnungseingriff. Zwischen dem Gehäuse 30 und dem Abtriebsorgan 44 existieren zwei Drehmomentübertragungswege 46, 48, die im Bereich einer Kopplungsanordnung 50 vor dem als Abtriebsnabe ausgebildeten Abtriebsorgan 44 in einer Kopplungsanordnung 50 zusammengeführt werden und in einem Eingangsbereich 52 aufgezweigt sind. Der Eingangsbereich 52 ist an das Gehäuse 30 fest ankoppelbar, so dass der Drehmomentenfluss vom Gehäuse 30 in den Eingangsbereich wahlweise unterbrechbar ist.

Im Eingangsbereich 52 zweigen sich die beiden Drehmomentübertragungswege 46, 48 auf. Der erste Drehmomentübertragungsweg 46 davon umfasst eine Phasenschieberanordnung 56, welche bewirkt, dass das über diesen ersten Drehmomentübertagungsweg 46 geleitete Drehmoment eine Phasenverschiebung bezüglich des über den zweiten Drehmomentübertragungsweg 48 geleiteten Drehmoments erfährt.

Die Phasenschieberanordnung 56 umfasst einen Torsionsschwingungsdämpfer 58 mit einer Primärseite 60, einer Sekundärseite 62 und einer einer Relativdrehung zwischen der Primärseite 60 und der Sekundärseite 62 entgegenwirkenden Federeinheit 64. Es sei hier darauf hingewiesen, dass der Torsionsschwingungsdämpfer 58 von herkömmlichem Aufbau sein kann und beispielsweise als Primärseite eine Nabenscheibe und als Sekundärseite zwei beidseits davon liegende und miteinander fest verbundene Deckscheibenelemente umfassen kann. Die Federeinheit 64 kann mehrere in Umfangsrichtung aufeinander folgende Federn, vorzugsweise Schraubendruckfedern, umfassen, die sich an der Primärseite 60 und der Sekundärseite 62 abstützend eine Rückstellkraft derselben bezüglich einander in Richtung zu einer Neutralrelativdrehlage bewirken. Der Torsionsschwingungsdämpfer 58 stellt also in dem in Fig. 1 dargestellten Ausgestaltungsbeispiel im Wesentlichen ein Schwingungssystem 66 bereit, welches im ersten Drehmomentübertragungsweg 46 zu einer Phasenverschiebung von darüber übertragenen Drehungleichförmigkeiten bzw. Drehmomentschwingungen führt. Dieses Schwingungssystem 66, weist bedingt durch die an der Primärseite 66 und der Sekundärseite 62 vorhandenen Massen, und die durch die Federeinheit 64 des Torsionsschwingungsdämpfers 58, welcher hier die Federanordnung des Schwingungssystems 66 bereitstellt, eine Eigenfrequenz bzw. Resonanzfrequenz auf. Bei Schwingungsanregungen unter dieser Eigenfrequenz werden zu übertragende Schwingungen im Wesentlichen ohne Phasenverschiebung übertragen. Wird die Resonanzfrequenz überschritten, tritt ein Phasensprung auf, der im Idealfalle und maximal 180° betragen kann, so dass anregende und weitergeleitete Schwingung zueinander gegenphasig verlaufen.

In der Kopplungsanordnung 50 werden die über die beiden Drehmomentübertragungswege 46, 48 geleiteten Drehmomente bzw. Drehmomentanteile wieder zusammengeführt. Hierzu ist die Kopplungsanordnung 50 als Planetengetriebeanordnung 68 ausgebildet und umfasst einen an den ersten Drehmomentübertragungsweg 48 angekoppelten Planetenradträger 70. Dieser trägt in Umfangsrichtung verteilt mehrere Planetenräder 72. Diese weisen zwei zueinander axial versetzt liegende Verzahnungen 74, 76 auf, die in dem in Fig. 1 dargestellten Ausgestaltungsbeispiel zueinander unterschiedliche Durchmesser bezogen auf die Rotationsachsen der Planetenräder 72 am Planetenradträger 70 aufweisen.

Ein erstes Hohlrad 78 ist mit der Sekundärseite 62 des Torsionsschwingungsdämpfers 58 bzw. des Schwingungssystems 66 verbunden und steht in Kämmeingriff mit den Verzahnungen 74 der Planetenräder 72. Ein zweites Hohlrad 80, welches im Wesentlichen auch einen Ausgangsbereich 82 der Drehschwingungsdämpfungsanordnung 46 bereitstellt, ist in Verzahnungseingriff mit den Verzahnungen 76 der Planetenräder 72. Das zweite Hohlrad 80 ist an das Abtriebsorgan 44 fest angebunden, so dass auch im Ausgangsbereich 82, also zwischen der Kopplungsanordnung 50 und dem Abtriebsorgan 44 der Drehmomentenfluss nicht wahlweise unterbrechbar bzw. herstellbar, sondern permanent eingerichtet ist. Dies gilt auch für den zwischen der Aufzweigung im Eingangsbereich 52 und der Zusammenführung der beiden Drehmomentübertragungswege 46, 48 im Bereich der Kopplungsanordnung 50 liegenden Bereich der Drehschwingungsdämpfungsanordnung 28. Die Sekundärseite 62 bzw. das damit gekoppelte Hohlrad 78 kann beispielsweise über eine Lagerung 86 am Ausgangsbereich 82 gelagert sein.

Die Planetengetriebeanordnung 68 bewirkt durch Zusammenwirkung der auf dem Planetenradträger 70 grundsätzlich frei drehbar getragenen Planetenräder 72 mit den beiden Hohlrädern 78, 80 eine Zusammenführung der über die beiden Drehmomentübertragungswege 46, 48 geleiteten Drehmomente. Enthalten diese Drehmomente Schwingungsanteile und ist die Frequenz dieser Schwingungs- bzw. Schwankungsanteile unter der Resonanzfrequenz des Schwingungssystems 66, so werden die beiden Drehmomente bzw. Drehmomentanteile in der Kopplungsanordnung 50 phasengleich zusammengeführt bzw. überlagert. Das in den Ausgangsbereich 82 weitergeleitete Drehmoment entspricht somit auch hinsichtlich seines Schwankungsverlaufs näherungsweise dem im Eingangsbereich 52 von der Überbrückungskupplung 54 aufgenommenen Drehmoment.

Liegt die Frequenz der Schwingungsanteile jedoch über der Resonanzfrequenz des Schwingungssystems 66, hier also des Torsionsschwingungsdämpfers 58, so überlagern sich die beiden über die Drehmomentübertragungswege 46, 48 geleiteten Drehmomente mit ihren Schwingungsanteilen in der Kopplungsanordnung 50 destruktiv. Im Idealfalle, also bei einer Phasenverschiebung von 180°, kann hier eine vollständige Auslöschung der Schwingungsanteile erreicht werden, so dass das am Ausgangsbereich 82 aufgenommene Drehmoment einen im Wesentlichen geglätteten, zumindest aber deutlich schwingungsreduzierten Verlauf aufweist.

Um das Dämpfungsverhalten der Drehschwingungsdämpfungsanordnung 42 weiter beeinflussen zu können, kann beispielsweise der Sekundärseite 62 eine Zusatzmasse 84 zugeordnet sein, um somit die sekundärseitige Masse zu erhöhen und damit einen Einfluss auf die Resonanzfrequenz zu nehmen. Ferner kann dem Schwingungssystem 66 eine allgemein mit 85 bezeichnete Reibungsdämpfungsanordnung zugeordnet sein, die beispielsweise parallel zu der Federeinheit 64 zwischen der Primärseite 60 und der Sekundärseite 62 wirken kann und als Coulombsche Reibeinrichtung oder als Fluidreibeinrichtung ausgebildet sein kann. Das Bereitstellen einer derartigen parallel zur Federeinheit 64 wirksamen Reibungsdämpfungsanordnung 85 beeinflusst im Wesentlichen auch die Größe der durch Schwingungssystem 66 eingeführten Phasenverschiebung.

Durch die Ausgestaltung des Torsionsschwingungsdämpfers 58, also die Masse an der Primärseite 60, die Masse an der Sekundärseite 62, die Steifigkeit der Federeinheit 64 und die die sekundärseitige Masse unterstützende Zusatzmasse 84, wird im Allgemeinen einen möglichst niedrige Eigenfrequenz des Schwingungssystems 66 angestrebt, um somit bereits bei vergleichsweise niedrigen Schwingungsanregungen, also bereits bei vergleichsweise niedriger Drehzahl, den Übergang in den überkritischen, also mit Phasenverschiebung arbeitenden Betriebszustand zu erlangen.

Dadurch, dass die beiden Verzahnungen 74, 76 zueinander unterschiedliche Durchmesser aufweisen, mithin also auch die beiden Hohlräder 78, 80 zueinander unterschiedliche Hohlräder aufweisen, wird es möglich, einen Einfluss auf die Verteilung der Drehmomente auf die beiden Drehmomentübertragungswege 46, 48 zu nehmen. Je näher die Durchmesser der Hohlräder 78, 80, somit also auch die Durchmesser der Verzahnungen 74, 76 beieinander liegen, desto mehr nähert sich der über dem Drehmomentübertragungsweg 46 geleitete Drehmomentenanteil 100 % an. Bei dem in der Fig. 1 dargestellten Ausgestaltungsbeispiel mit größerem Durchmesser der Verzahnung 74, welche mit dem Hohlrad 78 zusammenwirkt, wird ein Übersetzungsverhältnis erreicht, das unter 1 liegt, bei umgekehrtem Größenverhältnis wird ein Übersetzungsverhältnis erreicht, das über 1 liegt. In ersterem Falle wird das über den ersten Drehmomentübertragungsweg 46 geleitete Drehmoment unter Ausnutzung einer Drehmomentflussumkehr im zweiten Drehmomentübertragungsweg 48 erhöht, und zwar unter Abstützung an der Kopplungsanordnung 50. Auch hierbei wird eine destruktive Überlagerung der beiden Drehmomentflüsse in den Drehmomentübertragungswegen genutzt, um am Ausgangsbereich 82 ein im Wesentlichen geglättetes Gesamtdrehmoment zu erhalten. Im zweiten Falle, also bei größerer Verzahnung 76 und kleinerer Verzahnung 74, teilt sich entsprechend den Größenverhältnissen das am Eingangsbereich 52 eingeleitete Drehmoment so auf, dass in beiden Drehmomentübertragungswegen 46, 48 ein Drehmomentenfluss der gleichen Richtung erfolgt und die beiden in gleicher Richtung geleiteten Drehmomentanteile in der Kopplungseinrichtung 50 einander überlagert werden.

Durch das Bereitstellen der in Fig. 1 erkennbaren Drehschwingungsdämpfungsanordnung 28 als in sich geschlossenes System, also das Bereitstellen eines durch das Gehäuse 30 im Wesentlichen abgekapselten Volumens, wird es möglich, die verschiedenen zur Drehschwingungsdämpfung beitragenden Systembereiche durch das in dem Gehäuse 30 im Betrieb vorhandene Fluid vor übermäßigem Verschleiß zu schützen. Dies betrifft vor allem die Kopplungsanordnung 50 bzw. die Planetengetriebeanordnung 68, in welcher die beiden über die Drehmomentübertragungswege 46, 48 geleiteten Drehmomentenanteile zusammengeführt werden. Auch beeinflusst die Bewegung beispielsweise der Planetengetriebeanordnung 68 bzw. auch des Torsionsschwingungsdämpfers 58 in dem Fluid, welches allgemein als viskoses Medium zu betrachten ist, das Dämpfungsverhalten, da durch die Notwendigkeit, Fluid verdrängen zu müssen, Energie dissipiert wird.

Ein derartiger Aufbau der Drehschwingungsdämpfungsanordnung 28 eignet sich vor allem in Verbindung mit einem Automatikgetriebe, da auf diese Art und Weise die Versorgung des Innenraums 40 mit Fluid sichergestellt werden kann. Dabei kann vorgesehen sein, dass im Gehäuse des Automatikgetriebes, insbesondere auch im Nassraum, ein Getriebesteuergerät vorhanden ist, welches verschiedene Ventile ansteuern kann, um den Strömungsweg zum Innenraum 40 des Gehäuses 30 freizugeben bzw. zu unterbrechen. Das Fluid wird dabei durch die vermittels des Gehäuses 30 selbst angetriebene Pumpe aus dem Fluidsumpf im Gehäuse 12 abgezogen und dorthin auch wieder zurückgeführt.

Durch das Vorsehen der Elektromaschine 150 zusätzlich zur Brennkraftmaschine 34 wird es möglich, je nachdem, wie groß das in einem Antriebsstrang geforderte Drehmoment ist, diese beiden Aggregate parallel zu betreiben, oder nur eines davon. Weiterhin ist es selbstverständlich möglich, auch im Bremszustand sowohl das Bremsmoment der Brennkraftmaschine 34, als auch dasjenige der Elektromaschine 150 zu nutzen, wobei diese als Generator wirksam sein kann.

Aus der vorangehenden Beschreibung geht hervor, dass im Antriebszustand, also bei Einleitung eines Drehmomentes in das Gehäuse 30, aufgrund des Bereitstellens der beiden Drehmomentübertragungswege 46 und 48 nur ein Teil des gesamt zu übertragenden Drehmoments über das Schwingungssystem 66 bzw. den Torsionsschwingungsdämpfer 58 desselben geleitet wird. Dies ist insbesondere im Kontext eines Hybridantriebsmoduls 12 von besonderer Bedeutung. Bei einem derartigen Hybridantriebsmodul ist es möglich, dass beispielsweise dann, wenn ein großes Antriebsdrehmoment gefordert wird, dieses durch die Elektromaschine 150 alleine bzw. durch Zusammenwirkung der Elektromaschine 150 mit der Brennkraftmaschine 34 beispielsweise in einem so genannten Boost-Betrieb bereitgestellt wird. Da insbesondere dann, wenn durch die Ausgestaltung der Verzahnungen 74, 76 ein über eins liegendes Übersetzungsverhältnis der Kopplungsanordnung 50 erreicht wird, nur ein Teil dieses Drehmoments über den Torsionsschwingungsdämpfer 58 geleitet wird, muss dieser tatsächlich nicht auf die maximal zu erwartenden Antriebsdrehmomente ausgelegt werden. Hier könnte beispielsweise eine Auslegung auf das maximale mittlere Moment der Brennkraftmaschine 34 vorgesehen sein. Dies gestattet eine deutlich schwächere Dimensionierung des Torsionsschwingungsdämpfers 58 und mithin auch aufgrund der Möglichkeit, schwächer dimensionierte Federn für die Federeinheit 64 einzusetzen, eine geringere Baugröße desselben.

Die Fig. 2 zeigt ein Hybridantriebsmodul 12, bei welchem die Elektromaschine 150 mit einer in eine nasslaufende Kupplungsanordnung integrierten Drehschwingungsdämpfungsanordnung 28 gekoppelt ist. Diese nasslaufende Kupplungsanordnung 160 umfasst das Gehäuse 30 mit seiner getriebeseitigen Gehäuseschale 162 und seiner motorseitigen Gehäuseschale 164. An die motorseitige Gehäuseschale 164 sind die Lamellen bzw. Reibelemente in einer ersten Reibflächenformation 166 zur gemeinsamen Drehung um die Drehachse A mit dieser angekoppelt. An einen Reibelemententräger 168 sind die Lamellen bzw. Reibelemente einer zweiten Reibflächenformation 170 angekoppelt. Durch einen Kupplungskolben 172 können die Reibflächenformationen 166, 170 in gegenseitigen Reibeingriff gepresst werden, um eine Drehmomentübertragungsverbindung zwischen dem Gehäuse 30 und dem Reibelemententräger 168 herzustellen. Das Gehäuse 30 ist über eine Flexplatte oder dergleichen an eine Antriebswelle, beispielsweise die Kurbelwelle einer Brennkraftmaschine, ankoppelbar.

An der getriebeseitigen Gehäuseschale 162 ist die Rotoranordnung 154 der Elektromaschine 150 angeordnet. Die Statoranordnung 152 derselben kann beispielsweise am Gehäuse des Getriebes 10 getragen sein, so dass die Elektromaschine 150 hier im Wesentlichen zwischen dem Getriebe 10 und der nasslaufenden Kupplungsanordnung 160 angeordnet ist.

Der Reibelemententräger 168 ist mit einem als Zentralscheibenelement ausgebildeten Bauteil beispielsweise durch Vernietung radial außen fest verbunden. Dieses Bauteil bildet sowohl die Primärseite 60 des Torsionsschwingungsdämpfers 58 des Schwingungssystems 66, als in seinem radial inneren Bereich auch den Planetenradträger 70. Radial innen ist dieses Zentralscheibenelement auf dem Abtriebsorgan 44 radial gelagert und bezüglich diesen auch axial abgestützt.

Die Sekundärseite 62 des Torsionsschwingungsdämpfers 58 umfasst zwei Deckscheibenelemente, die durch Vernietung miteinander fest verbunden sind und, ebenso wie die Primärseite 60, Abstützbereiche zur Zusammenwirkung mit der Federeinheit 64 umfassen. Eines der Deckscheibenelemente ist nach radial innen geführt und seitlich neben dem Zentralscheibenelement auf dem Abtriebsorgan 44 gelagert. Durch die die beiden Deckscheibenelemente miteinander verbindenden Nietelemente ist auch die aus Blechmaterial geformte Zusatzmasse 84 an die Sekundärseite 62 angebunden. Das andere der beiden Deckscheibenelemente bildet in seinem radial inneren Bereich das Hohlrad 78 zur Zusammenwirkung mit den in Umfangsrichtung aufeinander folgend am Planetenradträger 70 getragenen Planetenrädern 72. Deren zweiter, hier mit kleinerem Durchmesser ausgebildeter Verzahnungsabschnitt 76 steht in Kämmeingriff mit dem Hohlrad 80, das wiederum durch Vernietung am Abtriebsorgan 44 festgelegt ist.

Es ist selbstverständlich, dass bei der in Fig. 2 dargestellten Ausgestaltungsform die Elektromaschine 150 auch so, wie dies in Fig. 1 dargestellt ist, positioniert sein könnte, also an der einem Antriebsaggregat zugewandten Seite des Gehäuses 30.

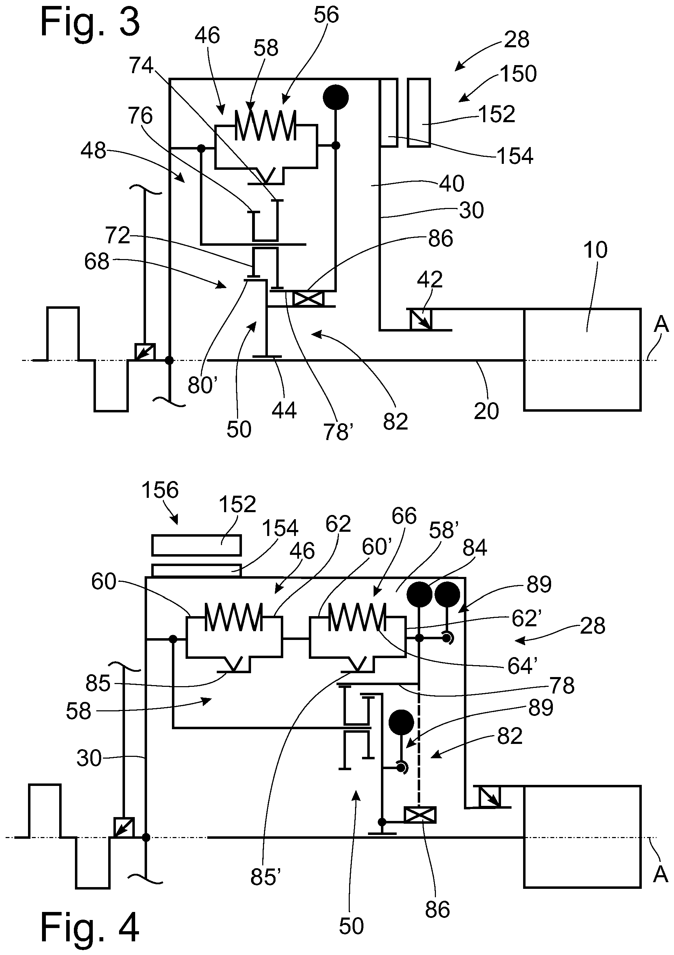

In Fig. 3 ist eine abgewandelte Ausgestaltungsform gezeigt, bei welcher die Planetengetriebeanordnung 68, also die Kopplungsanordnung 50, zur Zusammenwirkung mit den beiden Verzahnungen 74, 76 gestuft ausgebildeten Planetenrädern 72 jeweils ein Sonnenrad 78' und ein Sonnenrad 80' umfasst. Diese nunmehr radial innerhalb der in Umfangsrichtung um die Drehachse A verteilt liegenden Planetenräder 72 angeordneten Sonnenräder 78', 80' führen zur Überlagerung der in den beiden Drehmomentübertragungswegen 46, 48 geleiteten Drehmomentenanteile und zur Weiterleitung des durch Überlagerung erreichten Gesamtdrehmoments in den Ausgangsbereich 82 bzw. zum Abtriebsorgan 44.

Auch bei dieser Ausgestaltungsform liegt die Elektromaschine 150 an der dem Getriebe 10 zugewandten Seite des Gehäuses 30.

Bei der in Fig. 4 dargestellten nicht erfindungsgemäßen Ausgestaltungsform umfasst das Schwingungssystem 66 zwei hier seriell geschaltete Torsionsschwingungsdämpfer 58, 58'. Der Torsionsschwingungsdämpfer 58 bildet mit seiner Primärseite 60 im Wesentlichen auch die Primärseite 60 des Schwingungssystems 66. Seine Sekundärseite 62 ist mit der Primärseite 60' des zweiten Torsionsschwingungsdämpfers 58' verbunden. Dessen Sekundärseite 62' bildet im Wesentlichen auch die Sekundärseite des Schwingungssystems 66 und ist mit dem Hohlrad 78 bzw. auch der zusätzlichen Schwungmasse 84 gekoppelt. Ebenso wie bei dem Torsionsschwingungsdämpfer 58 kann auch bei dem Torsionsschwingungsdämpfer 58' eine parallel zu dessen Federeinheit 64' wirkende Reibungsdämpfungsanordnung 85' vorgesehen sein.

Es sei hier darauf hingewiesen, dass selbstverständlich die beiden Torsionsschwingungsdämpfer 58 und 58' hier auch parallel wirksam sein könnten. Zu diesem Zwecke sind die beiden Primärseiten 60 und 60' miteinander fest zu koppeln, während gleichermaßen auch die Sekundärseite 62 und 62' miteinander zu koppeln sind, so dass die beiden Federeinheiten zueinander parallel wirken können.

Man erkennt bei dieser Ausgestaltungsform, dass an der Sekundärseite 62' des zweiten Torsionsschwingungsdämpfers 58' alternativ oder zusätzlich zur zusätzlichen Schwungmasse 84 eine Schwingungsdämpfungsanordnung 89 vorgesehen ist. Diese kann als drehzahladaptiver Tilger ausgebildet sein mit einer oder mehreren Auslenkungsmassen, die entlang jeweiliger in Umfangsrichtung sich erstreckender Führungsbahnen auslenkbar sind. Diese Führungsbahnen weisen Scheitelbereiche auf, in welchen sie den größten Abstand zur Drehachse A haben. Bei Auslenkung der Auslenkungsmassen aus diesen Scheitelbereichen bewegen sie sich nicht nur in Umfangsrichtung, sondern werden radial nach innen geführt, so dass sie dabei potentielle Energie aufnehmen. Durch die Geometrie dieser Führungsbahnen und die Auswahl der Massen der Auslenkungsmassen wird es möglich, eine Abstimmung auf eine anregende Schwingung bzw. höhere Ordnungen, beispielsweise die Zündfrequenz, zu erreichen. Alternativ wäre es auch möglich, eine derartige Schwingungsdämpfungsanordnung 89 als Festfrequenztilger zu gestalten. Hierzu können eine oder mehrere Schwungmassen vorgesehen sein. Diese sind entgegen der Rückstellkraft von Federn auslenkbar, so dass durch die Auswahl der Massen einerseits und der Federkonstanten andererseits eine Abstimmung auf eine zu bedämpfende Frequenz vorgesehen sein kann.

Wie die nicht erfindungsgemäße Fig. 4 zeigt, ist es möglich, eine derartige Schwingungsdämpfungsanordnung 89 alternativ oder zusätzlich auch am Ausgangsbereich 82, beispielsweise angekoppelt an das Hohlrad, vorzusehen. Selbstverständlich könnte die in den ersten Drehmomentübertragungsweg 46 integrierte Schwingungsdämpfungsanordnung 89 auch an das Hohlrad 78 angekoppelt sein. Weiter wird darauf hingewiesen, dass derartige drehzahladaptiv wirksame oder als Festfrequenztilger wirksame Schwingungsdämpfungsanordnungen 89 auch bei allen anderen dargestellten Ausgestaltungsformen vorgesehen sein können, und zwar sowohl in Zuordnung zu einem der Drehmomentübertragungswege, als auch in Zuordnung zum Ausgangsbereich.

Die Fig. 4 zeigt eine weitere Alternative der Positionierung der Elektromaschine 150. Sie ist hier das Gehäuse 30 radial außen umgebend angeordnet. Die Rotoranordnung 154 ist aus einem Außenumfangsbereich des Gehäuses 30 festgelegt. Die Statoranordnung 152 umgibt die Rotoranordnung 154 radial außen und ist beispielsweise an einer Getriebeglocke oder dergleichen getragen.

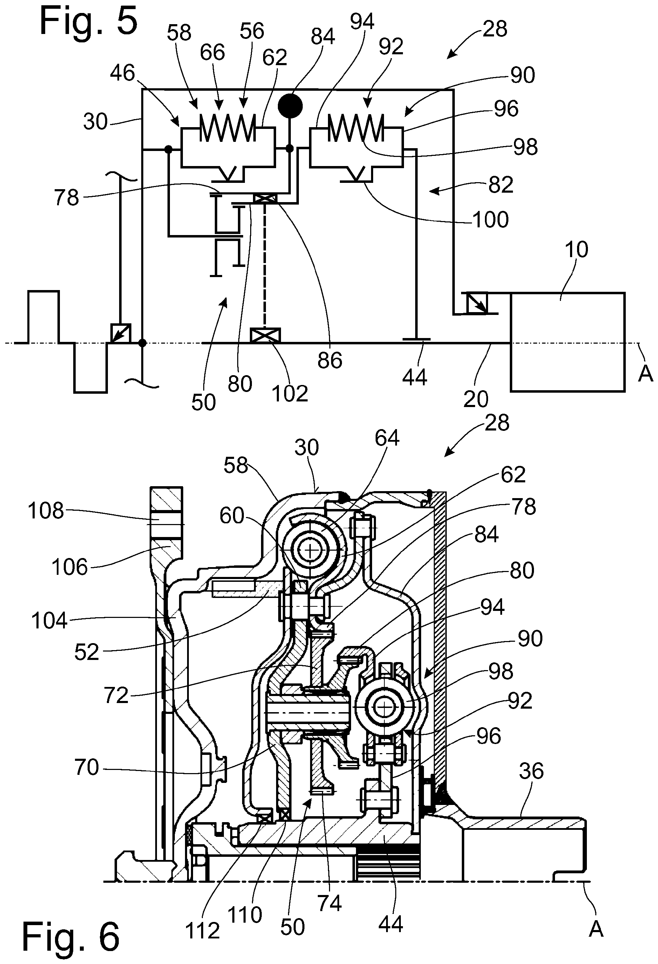

Bei dem in Fig. 5 gezeigten Aufbau ist neben dem im ersten Drehmomentübertragungsweg 46 wirksamen Schwingungssystem 66 der Phasenschieberanordnung 56 ein weiteres Schwingungssystem 90 dem Ausgangsbereich 82 zugeordnet. Das weitere Schwingungssystem 90 liegt also im Drehmomentenfluss zwischen dem Gehäuse 30 und dem Abtriebsorgan 44 folgend auf die Kopplungsanordnung 50. Das weitere Schwingungssystem 90 umfasst einen Torsionsschwingungsdämpfer 92 mit einer Primärseite 94, welche an das ausgangsseitige Hohlrad 80 angekoppelt ist, sowie einer Sekundärseite 96, welche an das Abtriebsorgan 44 angekoppelt ist. Dazwischen wirkt eine Federeinheit 98, so dass die Primärseite 94 und die Sekundärseite 96 bezüglich einander und gegen die Rückstellwirkung der Federn der Federeinheit 92 sich in Umfangsrichtung um die Drehachse A drehen können. Parallel zur Federeinheit 98 kann auch hier wieder eine Reibungsdämpfungsanordnung 100 wirksam sein.

Zwischen der Primärseite 94 dieses weiteren Schwingungssystems 90 bzw. dem damit gekoppelten Hohlrad 80 und der Sekundärseite 62 des Schwingungssystems 66 bzw. dem damit gekoppelten Hohlrad 78 ist eine Lagerung 86 vorgesehen. Ferner kann eine zusätzliche Abstützung bezüglich der Getriebeeingangswelle 20 über eine Lagerung 102 erfolgen.

Ein wesentlicher Vorteil dieser Ausgestaltungsvariante ist, dass zwischen den beiden hier seriell wirksamen Schwingungssystemen 66, 90 durch die Zusatzmasse 84 eine vergleichsweise träge Zwischenmasse zwischen den beiden Schwingungssystemen 66, 90 erreicht wird, was sich hinsichtlich der Schwingungsdämpfungscharakteristik als sehr vorteilhaft erweist. Da über das weitere Schwingungssystem 90 in jedem Falle das gesamt über die Drehschwingungsdämpfungsanordnung 28 geleitete Drehmoment zu übertragen ist, sollte dessen Federeinheit so ausgelegt sein, dass sie dieses Drehmoment im Bereich ihrer Elastizität übertragen kann, also ohne eine Drehblockierung zwischen der Primärseite 94 und der Sekundärseite 96 im gesamten Drehmomentenbereich elastisch wirksam ist.

Es ist selbstverständlich, dass beispielsweise die zusätzliche Schwingungsmasse 84 auch an anderer Position als Zwischenmasse wirksam werden kann. Beispielsweise könnte eine Ankopplung auch an die Primärseite 94 des Torsionsschwingungsdämpfers 92 oder unmittelbar an das Hohlrad 78 erfolgen.

Die Fig. 6 zeigt eine konstruktive Ausgestaltung des in Fig. 5 dargestellten Aufbauprinzips. Man erkennt das Gehäuse 12 der Drehschwingungsdämpfungsanordnung 58, welches aus mehreren Gehäuseteilen bzw. Gehäuseschalen zusammengefügt ist und die Pumpenantriebsnabe 36 zum Eingriff in den Nassraum 16 des Automatikgetriebes 10 aufweist. An einer dem Antriebsaggregat zugewandt zu positionierenden Gehäuseschale 104 ist eine Kopplungseinheit 106 vorgesehen, welche plattenartig oder ringscheibenartig ausgebildet sein kann und mehrere Kopplungsabschnitte 108 beispielsweise zum Anschrauben einer Flexplatte oder dergleichen aufweist, welche wiederum in ihrem radial inneren Bereich dann an die Antriebswelle 32 beispielsweise durch Verschraubung anzubinden ist. Auf diese Art und Weise kann das Gehäuse 12 zur Drehung um die Drehachse A angetrieben werden.

Der Eingangsbereich 52 ist beispielsweise durch Steckverzahnung an das Gehäuse 12 drehfest angekoppelt und in Verbindung mit der beispielsweise durch eine Nabenscheibe bzw. ein Zentralscheibenelement bereitgestellten Primärseite 60 des Torsionsschwingungsdämpfers 58. Dieses Zentralscheibenelement bildet in seinem radial inneren Bereich gleichzeitig auch den Planetenradträger 70, an welchem über entsprechende achsenartige Lagerungsstifte in Umfangsrichtung um die Drehachse verteilt mehrere Planetenräder 72 drehbar getragen sind. Der Planetenradträger 70 ist hier über eine Lagerung 110 auf dem Abtriebsorgan 44 drehbar gelagert. Auch die Sekundärseite 62, welche hier bereitgestellt ist durch zwei Deckscheibenelemente, kann im Bereich von einem, hier dem antriebsseitigen Deckscheibenelement und über eine Lagerung 112 auf dem Abtriebsorgan 44 drehbar gelagert sein. Der Planetenradträger 70 könnte bei dieser Ausgestaltungsform auch direkt an das Gehäuse 30, beispielsweise die dem Antriebsaggregat zugewandte Gehäuseschale 104 angebunden sein. Hierzu können in dem nach radial innen greifenden Deckscheibenelement der Sekundärseite 62 Durchgriffsaussparungen vorgesehen sein, durch welche hindurch entsprechende Befestigungsabschnitte des Planetenradträgers 70 greifen können, um sich bezüglich dieser Sekundärseite 62 in Umfangsrichtung auch bewegen können.

Das andere der beiden Deckscheibenelemente der Sekundärseite 62 bildet in seinem radial inneren Bereich das Hohlrad 78, das mit der Verzahnung 74 mit größerem Durchmesser der Planetenräder 72 zusammenwirkt.

Das weitere Schwingungssystem 90 bzw. dessen Torsionsschwingungsdämpfer 92 bildet mit einem der Deckscheibenelemente der Primärseite 94 desselben das Hohlrad 80. Ein als Sekundärseite 96 wirksames Zentralscheibenelement ist radial innen durch Vernietung oder dergleichen an das Abtriebsorgan 44 angebunden, könnte damit aber auch integral ausgebildet sein.

Die Zusatzmasse 84 umfasst hier zwei ringscheibenartig ausgebildete Masseteile, beispielsweise aus Blechmaterial oder aus Gussmaterial. Eines dieser Teile ist durch Vernietung an die Sekundärseite 62, also die beiden Deckscheibenelemente derselben angebunden und in seinem radial äußeren Bereich durch Vernietung mit dem anderem Teil verbunden. Dieses wiederum ist nach radial innen geführt und beispielsweise axial bezüglich des Gehäuses 12 bzw. auch radial bezüglich des Abtriebsorgans 44 gelagert.

Es wird darauf hingewiesen, dass in den Fig. 5 und 6 die Elektromaschine 150 zwar nicht dargestellt ist, diese aber so wie in den vorangehend dargestellten Ausgestaltungsvarianten positioniert sein kann. Hier ist also die Anordnung sowohl an der einem Antriebsaggregat zugewandten Seite, als auch an der einem Getriebe zugewandten Seite als auch am Außenumfangsbereich des Gehäuses 30 möglich.

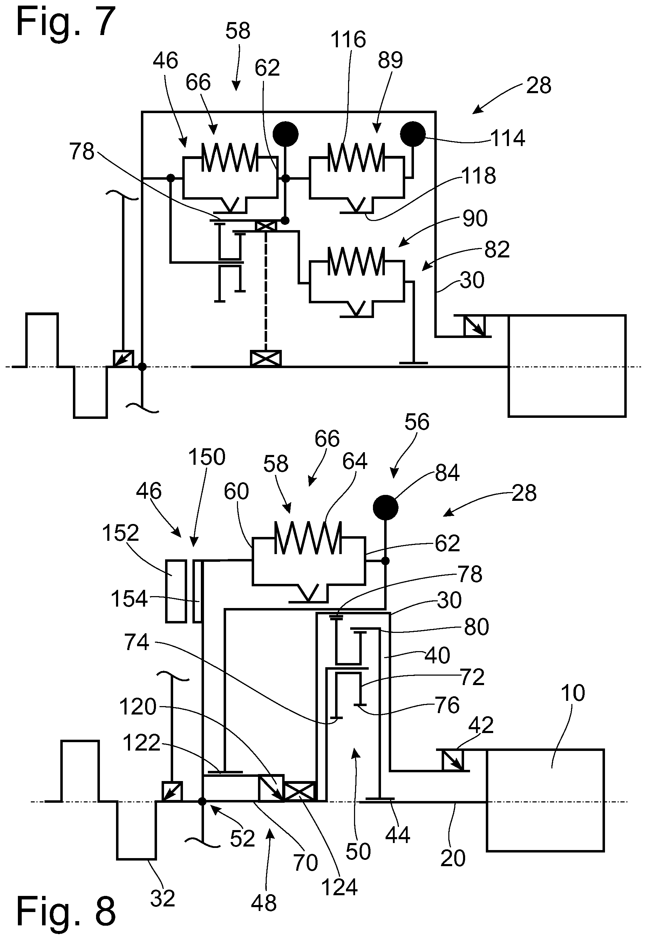

In Fig. 7 ist ein Aufbau gezeigt, welcher in prinzipieller Weise dem vorangehend mit Bezug auf den Fig. 5 beschriebenen Aufbau entspricht. Man erkennt auch hier die beiden Schwingungssysteme 66 und 90, wobei das erstgenannte in den ersten Drehmomentübertragungsweg 46 integriert ist, während das zweitgenannte dem Ausgangsbereich 82 zugeordnet ist. Weiter erkennt man hier den Aufbau einer zusätzlichen Schwingungsdämpfungsanordnung 89 als so genannter Festfrequenztilger. Man erkennt die Masse 114, beispielsweise bereitgestellt durch ein oder mehrere Masseteile. Eine oder mehrere Federn 116 koppeln diese Masse 114 hier an die Sekundärseite 62 des Torsionsschwingungsdämpfers 58 bzw. das Hohlrad 78 an. Parallel zu der oder den Federn 116 kann eine Reibungsdämpfungsanordnung 118 wirksam sein, so dass eine zusätzliche Energieabfuhr realisierbar ist.

Wesentlich ist bei derartigen zusätzlichen Schwingungsdämpfungsanordnungen, dass diese, unabhängig davon, ob als Festfrequenztilger oder als drehzahladaptiver Tilger ausgebildet, nicht im Drehmomentübertragungsweg liegen, sondern im Wesentlichen ohne Drehmomentenbelastung schwingende Massen umfassen.

Auch bei dieser Ausgestaltungsform kann die Elektromaschine 150 an den beiden axialen Seiten des Gehäuses 30 oder dieses radial außen umgebend vorgesehen sein.

Bei dem in Fig. 8 dargestellten nicht erfindungsgemäßen Ausgestaltungsbeispiel ist das Schwingungssystem 66 und mithin die Phasenschieberanordnung 56 außerhalb des Gehäuses 30 angeordnet. Der Eingangsbereich 52 ist an die Antriebswelle 32 zur gemeinsamen Drehung mit dieser angekoppelt. Der Torsionsschwingungsdämpfer 58 kann beispielsweise so angeordnet sein, dass die Federn seiner Federeinheit 64 das Gehäuse 30 radial umgeben und sich mit diesem axial überlappen.

Der Planetenradträger 70 des zweiten Drehmomentübertragungswegs 48 greift in den Innenraum 40 des Gehäuses 30 ein und ist durch eine Dichtungsanordnung 120 fluiddicht, jedoch drehbar in das Gehäuse 30 hineingeführt. Die drehfeste Kopplung des Gehäuses 30 mit der Sekundärseite 62 des Torsionsschwingungsdämpfers 58 kann beispielsweise durch eine Steckverzahnung 122 erfolgen. Weiterhin kann das Gehäuse 30 auf dem Planetenradträger 70 durch eine Lagerung 124 gelagert sein. Da das Gehäuse 30 über die Lagerung 124 bezüglich des Planetenradträgers 70 gelagert und somit im Wesentlichen definiert radial gehalten ist, ist das Bereitstellen eines im Wesentlichen konstanten Dichtspaltes bei der Dichtungsanordnung 120 gewährleistet.

Der über die Phasenschieberanordnung 56 geleitete Drehmomentenanteil gelangt über die Sekundärseite 62 und die Steckverzahnung 122 in das Gehäuse 30. Dieses bildet entweder selbst das Hohlrad 78 oder ist damit fest verbunden. Durch die Planetenräder 72, die jeweils wiederum die beiden Verzahnungen 74, 76 aufweisen, wird eine Zusammenführung der Drehmomentenanteile erreicht und deren Weiterleitung über das Hohlrad 80 zum Abtriebsorgan 44 und mithin zur Getriebeeingangswelle 20.

Um bei dieser Ausgestaltung eine fluiddichte Kapselung des Innenraums 40 zu gewährleisten, ist die auf kleinerem Radius als die Dichtungsanordnung 42 positionierte Dichtungsanordnung 120 bezüglich der erstgenannten Dichtungsanordnung relativbewegbar. Die Versorgung des Innenraums 40 des Gehäuses 30 mit Fluid erfolgt in der vorangehend bereits beschriebenen Art und Weise. Durch die definierte bzw. gesteuerte Zufuhr von Fluid in den Innenraum 40 wird weiterhin gewährleistet, dass die Dichtflächen der Dichtungsanordnung sowohl im Fahrbetrieb, als auch bei Stillstand weitgehend nicht mit Fluid benetzt sind. Im Stillstand wird das Gehäuse 30 sich so weit entleeren, dass der Füllstand unter der Dichtungsanordnung 120 liegt. Im Fahrzustand wird fliehkraftbedingt das Fluid sich primär nach radial außen verlagern, so dass auch in diesem Zustand eine Benetzung der Dichtungsanordnung 120 im Wesentlichen nicht vorliegen wird.

Bei dieser nicht erfindungsgemäßen Ausgestaltungsform wird also die Wirkung des Fluids sowohl hinsichtlich der Verschleißminderung, als auch hinsichtlich einer zusätzlichen Dämpfungskomponente nur im Bereich der Kopplungsanordnung 50 genutzt.

Um bei dieser nicht erfindungsgemäßen Ausgestaltungsvariante die durch Schwingungsüberlagerung generierte Dämpfungsfunktionalität der Drehschwingungsdämpfungsanordnung 28 auch im Antriebszustand der Elektromaschine 150 nutzen zu können, kann diese, wie in Fig. 8 angedeutet, mit dem Eingangsbereich des Schwingungssystems 66, also der Primärseite des Torsionsschwingungsdämpfers 58, gekoppelt sein. Grundsätzlich ist es aber auch möglich, die Statoranordnung 154 an das Gehäuse 30, beispielsweise der dem Getriebe 10 zugewandten Seite desselben, anzubinden.

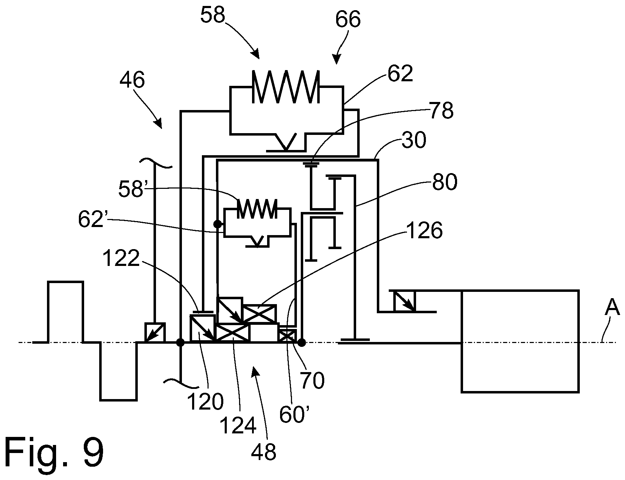

Bei dem in Fig. 9 dargestellten nicht erfindungsgemäßen Aufbau umfasst das Schwingungssystem 66 wieder zwei Torsionsschwingungsdämpfer 58, 60, von welchen der erstgenannte in einer der Fig. 8 entsprechenden Art und Weise außerhalb des Gehäuses 30 liegt, während der zweite Torsionsschwingungsdämpfer 58 innerhalb des Gehäuses, gleichwohl jedoch im ersten Drehmomentübertragungsweg 46 liegt. Dazu ist die Sekundärseite 62 des ersten Torsionsschwingungsdämpfers 58 über die vorangehend bereits angesprochene Steckverzahnung 122 nunmehr an die Primärseite 60' des im Gehäuse 30 liegenden Torsionsschwingungsdämpfers 58 angebunden. Dessen Sekundärseite 62' ist an das Gehäuse 30 selbst angekoppelt, welches wiederum das Hohlrad 78 trägt bzw. selbst bereitstellt.

Vermittels der Lagerung 124 ist bei diesem Ausgestaltungsbeispiel die Primärseite 60' des Torsionsschwingungsdämpfers 58' auf dem Planetenradträger 70 und somit dem zweiten Drehmomentübertragungsweg 48 gelagert. Über eine weitere Lagerung 126 ist das Gehäuse 30 auf der Primärseite 60' des Torsionsschwingungsdämpfers 58' gelagert. Hier kann die Primärseite 60' des zweiten Torsionsschwingungsdämpfers 58 als Zwischenwelle ausgebildet sein bzw. an diese angebunden sein.

Auch hier liegt die Dichtungsanordnung 120, durch welche das Gehäuse 30 fluiddicht bezüglich des Planetenradträgers 70 angeschlossen ist, vergleichsweise weit radial innen bezüglich der Drehachse A, so dass unter Berücksichtigung des sich sowohl im Fahrbetrieb als auch im Stillstandzustand einstellenden Füllzustands eine Benetzung von dessen Dichtflächen weitgehend ausgeschlossen werden kann.

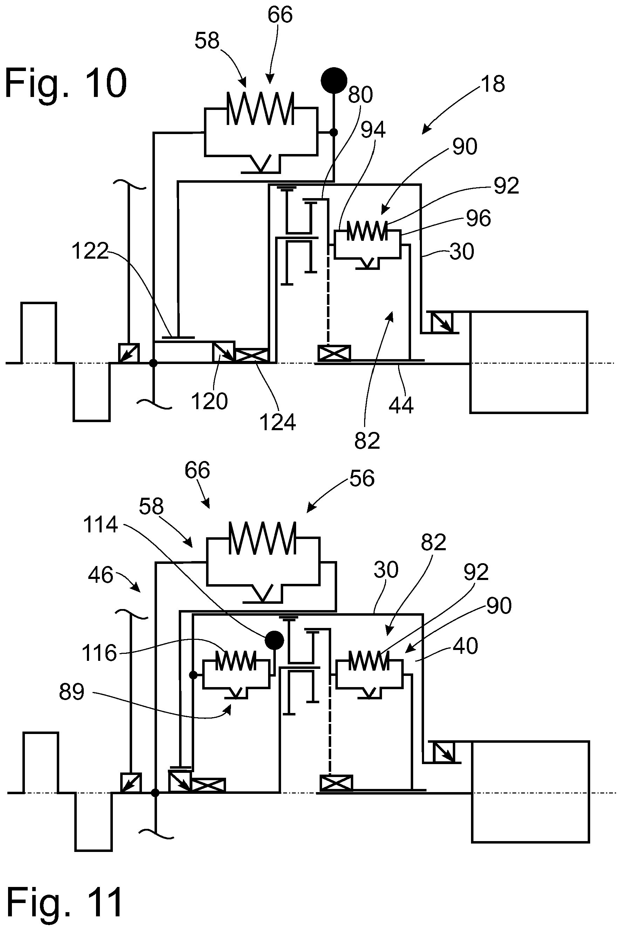

In Fig. 10 ist ein Aufbau gezeigt, welcher im Wesentlichen eine Kombination der Ausgestaltungsvariante gemäß Fig. 8 mit der Ausgestaltungsvariante gemäß Fig. 5 zeigt. Das Schwingungssystem 66 bzw. dessen Torsionsschwingungsdämpfer 58 ist außerhalb des Gehäuses 30, beispielsweise dieses im Wesentlichen radial außen umgebend angeordnet. Im Ausgangsbereich 82 liegt folgend auf das Hohlrad 80 das weitere Schwingungssystem 90 mit seinem Torsionsschwingungsdämpfer 92. Dessen Sekundärseite ist an das Abtriebsorgan 44 angekoppelt.

Eine Weiterbildung des in Fig. 10 dargestellten Ausgestaltungsbeispiels ist in Fig. 11 gezeigt. Hier ist zusätzlich in den ersten Drehmomentübertragungsweg 46 eine Schwingungsdämpfungsanordnung 89, hier in Form eines Festfrequenztilgers, wie vorangehend bereits mit Bezug auf die Fig. 7 beschrieben, vorgesehen. Eine Schwungmasse 114 mit einem oder mehreren Masseteilen ist über eine oder mehrere Federn 116, beispielsweise ausgebildet als Schraubendruckfedern oder als Elastomerblöcke, beispielsweise Gummielemente oder dergleichen, an das Gehäuse 30 angebunden und in dessen Innenraum 40 vorgesehen.

Bei den in den Fig. 9, 10 und 11 dargestellten Ausgestaltungsvarianten kann die in den Figuren nicht gezeigte Elektromaschine 150 so positioniert sein, wie vorangehend mit Bezug auf die Fig. 8 erläutert. Hier ist also sowohl eine Anbindung an die Primärseite des Torsionsschwingungsdämpfers 58, also den Eingangsbereich des Schwingungssystems 66 bzw. der Drehschwingungsdämpfungsanordnung 28, als auch das Gehäuse 30.

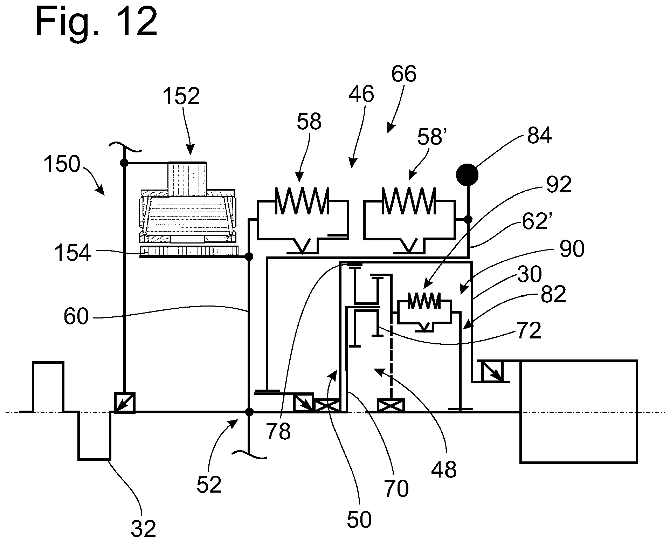

Die Fig. 12 zeigt eine Ausgestaltungsform, bei welcher das Schwingungssystem 66, hier wieder aufgebaut mit zwei seriell wirksamen Torsionsschwingungsdämpfern 58, 58' außerhalb des Gehäuses 30, diesem im Drehmomentenfluss also vorgeschaltet angeordnet ist. Der Eingangsbereich 52 und damit die Primärseite 60 des ersten Torsionsschwingungsdämpfers 58 ist an die Antriebswelle, also beispielsweise die Kurbelwelle 32, angekoppelt. An die Primärseite 60 ist auch die Rotoranordnung 154 der Elektromaschine 150 angekoppelt. Die Statoranordnung 152 ist der Rotoranordnung nicht axial gegenüberliegend, sondern diese radial außen umgebend angeordnet, so dass hier grundsätzlich ein Aufbau des Innenläufertyps realisiert ist. Die Sekundärseite 62' des zweiten Torsionsschwingungsdämpfers 58' ist beispielsweise durch Verzahnungseingriff an eine Gehäusenabe des Gehäuses 30 angekoppelt. Dieses trägt bzw. bildet selbst das Hohlrad 78 zur Zusammenwirkung mit den Planetenrädern 72. Die Planetenräder sind am Planetenradträger 70 drehbar getragen. Dieser ist vermittels einer aus dem Gehäuse 30 hervorstehenden Welle oder dergleichen an den Eingangsbereich 52 angebunden.

Im Inneren des Gehäuses 30 ist integriert in den Ausgangsbereich 82 das weitere Schwingungssystem 90 mit seinem Torsionsschwingungsdämpfer 92 vorgesehen.

Wie vorangehend bereits dargelegt, wird aufgrund der Aufteilung des Drehmoments auf die beiden Drehmomentübertragungswege 46, 48 grundsätzlich eine Entlastung des Schwingungssystems 66 erreicht, so dass diese auch dann, wenn Brennkraftmaschine und Elektromaschine zusammen ein Summendrehmoment liefern, nicht übermäßig stark belastet werden. Dies trifft jedoch nicht für das weitere Schwingungssystem 90 zu. Das gesamte im Bereich der Kopplungsanordnung 50 wieder zusammengeführte Drehmoment ist über dieses weitere Schwingungssystem 90 zu übertragen, so dass dieses derart dimensioniert sein muss, dass es auch das durch die Elektromaschine und die Brennkraftmaschine zusammen gelieferte maximale Summenmoment übertragen kann.

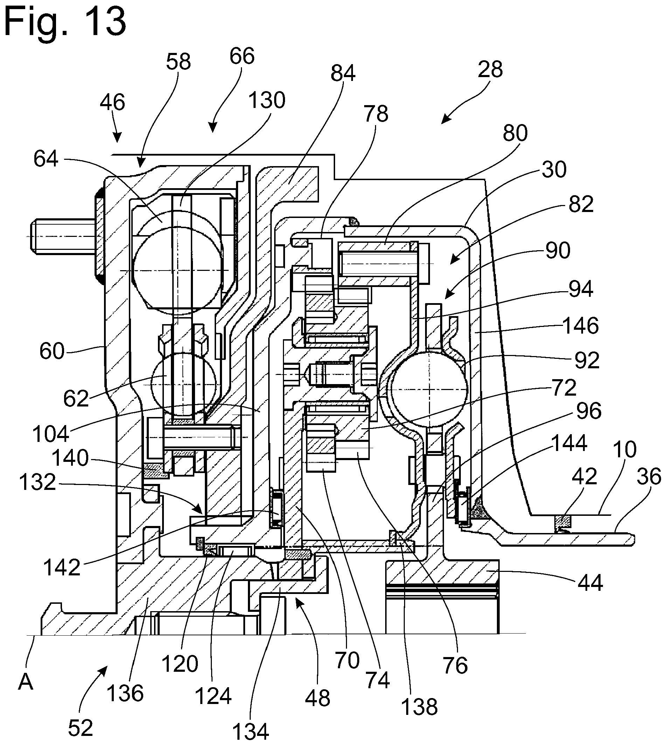

Die Fig. 13 zeigt in einer Teil-Längsschnittdarstellung eine konstruktive Ausführung des mit Bezug auf die Fig. 12 bereits erläuterten Aufbauprinzips. Der Torsionsschwingungsdämpfer 12 bzw. dessen Primärseite 60 ist mit zwei in axialem Abstand zueinander liegenden Deckscheibenelementen ausgebildet. Ein antriebsseitig positioniertes dieser beiden Deckscheibenelemente kann über eine Flexplatte oder dergleichen an eine Antriebswelle, also beispielsweise Kurbelwelle eines Antriebsaggregats, zur gemeinsamen Drehung um die Drehachse A angekoppelt werden.

Der Torsionsschwingungsdämpfer 58 ist hier zweistufig ausgebildet. Eine erste Stufe umfasst die beiden bereits angesprochenen Deckscheibenelemente als Eingangsbereich bzw. Primärseite und ein Zentralscheibenelement 130 als Sekundärseite bzw. Ausgangsbereich. Dieses Zentralscheibenelement 130 ist vermittels eines ersten Federsatzes der Federeinheit 64 bezüglich der beiden Deckscheibenelemente um die Drehachse A drehbar und bildet in seinem radial inneren Bereich gleichzeitig auf den Eingangsbereich bzw. die Primärseite einer radial inneren, zweiten Dämpferstufe. Diese ist zur ersten Dämpferstufe seriell wirksam und umfasst als Ausgangsseite bzw. Sekundärseite, welche gleichzeitig auch die Sekundärseite 62 des Torsionsschwingungsdämpfers 58 bereitstellt, zwei weitere Deckscheibenelemente, die beidseits des Zentralscheibenelements 130 angeordnet sind und beispielsweise durch Verschraubung mit einer hier scheibenartig ausgebildeten Zusatzmasse 84 verbunden sein können. Ein weiterer Federsatz der Federeinheit 64 des Torsionsschwingungsdämpfers 58 wirkt zwischen diesen beiden weiteren Deckscheibenelementen und dem Zentralscheibenelement 130 und ermöglicht somit eine Relativdrehung dieser beiden Systembereiche bezüglich einander.

Radial innen ist die Zusatzmasse 84 mit dem Gehäuse 30 bzw. einer antriebsseitigen Gehäuseschale 104 desselben über Verzahnungen 132 in Drehkopplungseingriff. An dieser Gehäuseschale 104 ist radial außen beispielsweise durch Vernietung das Hohlrad 78 festgelegt, welches in Kämmeingriff mit den Verzahnungen 74 der Planetenräder 72 steht.

Der die Planetenräder 72 tragende Planetenradträger 70 ist radial innen beispielsweise vermittels einer Hirth-Verzahnung und unter Einsatz einer Spannhülse 134 an eine Eingangsnabe 136 angebunden. Diese wiederum ist mit der Primärseite 60 des Torsionsschwingungsdämpfers 58 fest verbunden, so dass im Bereich dieser Antriebsnabe 136 eine Aufzweigung in die beiden Drehmomentübertragungswege 46 und 48 erfolgt.

Das Hohlrad 80, das mit den Verzahnungen 76 der Planetenräder 72 in Kämmeingriff steht, ist an die Primärseite 94 des Torsionsschwingungsdämpfers 90 beispielsweise durch Verschraubung, Vernietung oder in sonstiger Weise fest angebunden. Diese Primärseite 94 umfasst zwei Deckscheibenelemente, welche in axialem Abstand zueinander miteinander fest verbunden sind und zwischen sich ein Zentralscheibenelement der Sekundärseite 96 aufnehmen. Dieses ist an das Abtriebsorgan 44 beispielsweise durch Verschweißung, Vernietung oder dergleichen fest angebunden oder, wie hier dargestellt, integral damit ausgebildet. Über ein beispielsweise zusammen mit dem Planetenradträger 70 an die Antriebsnabe 136 angebundenes, hülsenartiges Lagerungselement 138 ist die Primärseite 94 des Torsionsschwingungsdämpfers 90 radial bezüglich des Planetenradträgers 70 und mithin auch bezüglich der Eingangsnabe 136 abgestützt. Ein Achsversatz zwischen der Drehachse einer antreibenden Welle und der Drehachse einer Abtriebswelle, welche mit dem Abtriebsorgan 44 zu koppeln ist, kann durch die Radialrelativbewegbarkeit der Sekundärseite 96 bezüglich der Primärseite 94 des Torsionsschwingungsdämpfers 90 kompensiert werden.

Eine axiale Lagerung der Sekundärseite 62 des Torsionsschwingungsdämpfers 58, also der in der zweiten Dämpferstufe vorgesehenen Deckscheibenelemente, kann beispielsweise unmittelbar über ein in der Fig. 11 eingezeichnetes Lagerungselement 140 bezüglich der Primärseite 60 des Torsionsschwingungsdämpfers erfolgen. Eine radiale Lagerung der Sekundärseite 62 des Torsionsschwingungsdämpfers 58 kann über den Verzahnungseingriff der Zusatzmasse 84 mit dem Gehäuse 30 und die Lagerung des Gehäuses 30 vermittels des Lagers 124 auf der Eingangsnabe 136 realisiert sein. Der Planetenradträger 70 ist axial bezüglich des Gehäuses 30 durch ein Lager 142 gelagert. In der anderen axialen Richtung ist diese über das Lagerungselement 138 an der Primärseite 94 des Torsionsschwingungsdämpfers 90 abgestützt, die über ein weiteres Axiallager 144 axial bezüglich einer abtriebsseitigen Gehäuseschale 146 abgestützt ist. Antriebsseitig ist das Gehäuse 30 vermittels der dynamischen Dichtungsanordnung 120 auf vergleichsweise kleinerem Radius bezüglich der Eingangsnabe 136 abgedichtet. Auf etwas größerem Radius ist das Gehäuse 30 bzw. die Pumpennabe 36 desselben durch die dynamische Dichtung 42 bezüglich des Getriebes 10 abgedichtet.

Die Einstellung des Schwingungsdämpfungsverhaltens kann bei dieser Ausgestaltungsvariante insbesondere durch die massemäßige Auslegung der Primärseite 60 und der Sekundärseite 62 des Torsionsschwingungsdämpfers 58 und auch die Auswahl der Masse bzw. des Massenträgheitsmoments der Zusatzmasse 84 selbstverständlich in Zusammenwirkung mit der Federsteifigkeit der Federeinheit 64 erfolgen.

Die in Fig. 13 nicht dargestellte Elektromaschine kann, wie dies in Fig. 12 in prinzipartiger Weise gezeigt ist, seitlich neben dem Schwingungssystem 30 angeordnet sein, also beispielsweise mit dem motorseitig positionierten, sehr massiv ausgestalteten Deckscheibenelement der Primärseite 60 des Torsionsschwingungsdämpfers 58 verbunden sein.

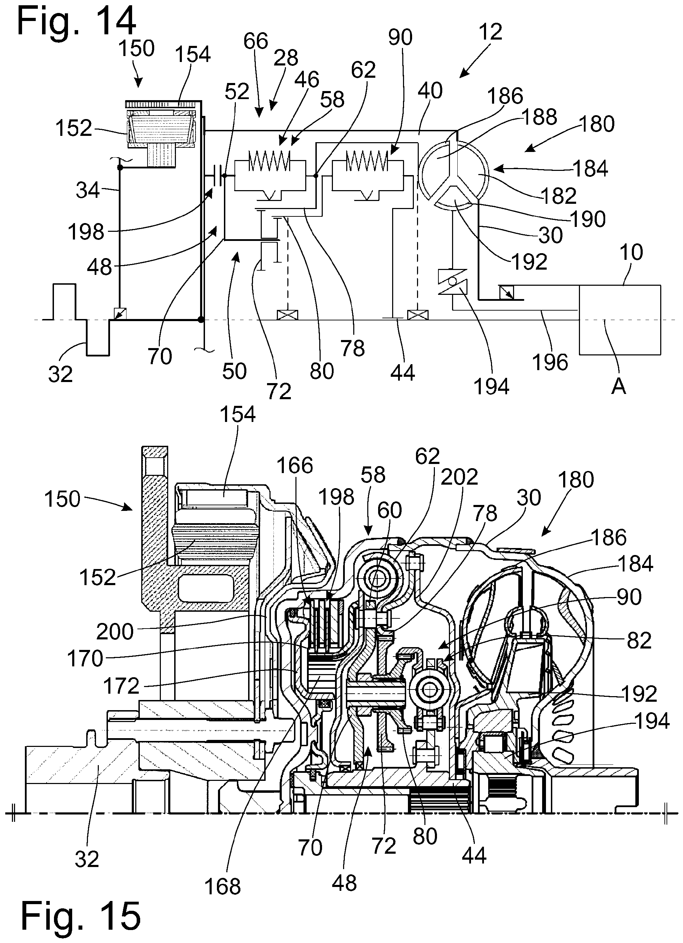

Die Fig. 14 zeigt ein Hybridantriebsmodul 12, bei welchem die Elektromaschine 150 mit einem hydrodynamischen Drehmomentwandler 180 gekoppelt ist. Dieser umfasst ein Gehäuse 30, das an der dem Getriebe 10 zugewandten Seite mit einer Mehrzahl von daran getragenen Pumpenradschaufeln 182 ein allgemein mit 184 bezeichnetes Pumpenrad bildet. An dieses Gehäuse 30 ist weiterhin beispielsweise an der dem Antriebsaggregat 34 zugewandten Seite die Rotoranordnung 154 der Elektromaschine 150 festgelegt. Hier ist die Rotoranordnung 154 die beispielsweise an der Brennkraftmaschine 34 getragene Statoranordnung 152 radial außen umgebend angeordnet, so dass hier grundsätzlich der Aufbau eines Außenläufers realisiert ist.

Im Innenraum 40 des Gehäuses 30 ist ein Turbinenrad 186 mit seinen den Pumpenradschaufeln 182 axial gegenüberliegenden Turbinenradschaufeln 188 vorgesehen. Im radial inneren Bereich liegt zwischen dem Turbinenrad 186 und dem Pumpenrad 184 ein Leitrad 190 mit seinen Leitradschaufeln 192. Das Leitrad 190 ist über eine Freilaufanordnung 194 auf einer Stützhohlwelle 196 in einer Drehrichtung um die Drehachse A drehbar getragen.

Die Drehschwingungsdämpfungsanordnung 28 ist in den Drehmomentübertragungsweg zwischen einer Überbrückungskupplung 198 und dem Abtriebsorgan 44 angekoppelt. Dabei kann die Überbrückungskupplung 198 beispielsweise mit den vorangehend erläuterten Reibflächenformationen ausgebildet sein, so dass im Einrückzustand eine direkte Drehmomentübertragungsverbindung zwischen dem Gehäuse 30 und dem Abtriebsorgan 44 hergestellt ist. Im ausgerückten Zustand der Überbrückungskupplung 198 wird das Drehmoment unter Ausnutzung der hydrodynamischen Zirkulation zwischen dem Pumpenrad 184, dem Turbinenrad 186 und dem Leitrad 190 das Drehmoment über das Turbinenrad in Richtung zum Abtriebsorgan 44 geleitet.

Folgend auf die Überbrückungskupplung 142 zeigen sich die beiden Drehmomentübertragungswege 46, 48 auf. Im ersten Drehmomentübertragungsweg liegt wieder der Torsionsschwingungsdämpfer 58, während im zweiten Drehmomentübertragungsweg die Kopplungsanordnung 50 mit dem Planetenradträger 70 und den daran getragenen mit zwei Verzahnungsbereichen ausgebildeten Planetenrädern 72 vorgesehen ist. Die Sekundärseite 62 des Torsionsschwingungsdämpfers 58 ist einerseits an das Hohlrad 78 angebunden, steht andererseits aber auch in Verbindung mit dem Turbinenrad 186. Dieses trägt somit zur Erhöhung der sekundärseitigen Masse des Schwingungssystems 66 bei.

Das Hohlrad 80 ist über das weitere Schwingungssystem 90 an das Abtriebsorgan 44 angekoppelt. Dies bedeutet, dass bei ausgerückter Überbrückungskupplung das weitere Schwingungssystem 90 als so genannter Turbinendämpfer wirksam ist.

Eine konstruktive Ausführung dieses in Fig. 14 veranschaulichten Aufbauprinzips ist in Fig. 15 gezeigt. Man erkennt die über eine Trägeranordnung 200 an die Kurbelwelle 32 angebundene Rotoranordnung 154 der Elektromaschine 150. Über diese Trägeranordnung 200 ist die Rotoranordnung 154 gleichzeitig auch an das Gehäuse 30 des hydrodynamischen Drehmomentwandlers 180 angekoppelt.

Die Überbrückungskupplung 198 umfasst im dargestellten Beispiel die erste Reibflächenformation 166 mit mehreren ringscheibenartigen Reibelementen, die mit dem Gehäuse 30 zur gemeinsamen Drehung gekoppelt sind, sowie die zweite Reibflächenformation 170 mit mehreren Reibelementen, wobei durch den Kupplungskolben 172 die beiden Reibflächenformationen 166, 170 in Reibeingriff bringbar sind. Der Reibelemententräger 168 ist an die Primärseite 60 des Torsionsschwingungsdämpfers 58 angekoppelt, welche hier ein Zentralscheibenelement umfasst. In seinem radial inneren Bereich bildet das Zentralscheibenelement den Planetenradträger des zweiten Drehmomentübertragungswegs 48, an welchem die in Umfangsrichtung verteilt liegenden, mit zwei Verzahnungsbereichen ausgebildeten Planetenräder 72 drehbar getragen sind. Dieser Planetenradträger 70 ist, ebenso wie ein Deckscheibenelement der Sekundärseite 62 des Torsionsschwingungsdämpfers 58 auf dem Abtriebsorgan 44 drehbar gelagert. Das andere der beiden Deckscheibenelemente der Sekundärseite 62 bildet das Hohlrad 78 zur Zusammenwirkung mit den Planetenrädern 72.

Über eine mehrere scheibenartige Bauteile umfassende Kopplungsanordnung 202 ist das Turbinenrad 186 an die Sekundärseite 62 angekoppelt, wozu die die beiden Deckscheibenelemente verbindenden Nietbolzen genutzt werden können. Diese Kopplungsanordnung 202 übergreift in Axialrichtung im Wesentlichen die Planetenräder 72 und das im Ausgangsbereich 82 wirksame weitere Schwingungssystem 90 in axialer Richtung.

Es sei darauf hingewiesen, dass die verschiedenen zur Schwingungsdämpfung beitragenden Aspekte, wie z. B. mehrere seriell oder parallel wirksame Torsionsschwingungsdämpfer bei dem Schwingungssystem 66 oder/und bei dem weiteren Schwingungssystem 90, in Verbindung mit einer oder mehreren zusätzlichen Schwingungsdämpfungsanordnungen bei den vorangehend beschriebenen Ausgestaltungsformen unabhängig davon vorgesehen sein können, ob Teile der zur Schwingungsdämpfung beitragenden Systembereiche innerhalb des Gehäuses 30 oder außerhalb des Gehäuses angeordnet sind. Das heißt, es sind alle vorangehend erläuterten und zur Drehschwingungsdämpfung beitragenden Aspekte beliebig miteinander kombinierbar. Dies trifft gleichermaßen für die Ausgestaltung der Kopplungsanordnung bzw. der Planetengetriebeanordnung derselben zu. Diese kann mit Hohlrädern oder Sonnenrädern bereitgestellt werden. Auch ist es selbstverständlich, dass die in Umfangsrichtung um die Drehachse verteilt liegenden Planetenräder mit den beiden Verzahnungen 74, 76 integral ausgebildet seien können, oder aus jeweils zwei jeweils eine der Verzahnungen bereitstellenden Teilen zusammengefügt sein können.

Weiter ist darauf hinzuweisen, dass selbstverständlich bei allen vorangehend erläuterten Ausgestaltungsformen die Elektromaschine auch unter Berücksichtigung des allgemein zur Verfügung stehenden Bauraums an der Motorseite, der Getriebeseite oder im radial äußeren Bereich, also die Drehschwingungsdämpfungsanordnung außen umgebend, angeordnet sein kann.

Ferner ist zu betonen, dass aufgrund der Tatsache, dass bei Wirksamkeit der Drehschwingungsdämpfungsanordnung eine Relativdrehung des Eingangsbereichs bezüglich des Ausgangsbereichs derselben lediglich in einem durch die Elastizität des Schwingungssystem bestimmten Winkelbereich erfolgen wird. Dies bedeutet, dass auch die Kopplungsanordnung lediglich vergleichsweise kleine Relativdrehbewegungen zwischen den Planetenrädern einerseits und den Hohlrädern bzw. Sonnenrädern andererseits erfahren wird. Obgleich aus Symmetriegründen und aufgrund des vergleichsweise einfachen Aufbaus die Ausgestaltung der Planetenräder, der Hohlräder bzw. der Sonnenräder als jeweils um deren Drehachsen vollständig umlaufende Räder ausgebildet sein können, ist es gleichwohl möglich, hier Segmenträder sowohl für die Planetenräder einerseits, als auch die Hohlräder bzw. Sonnenräder andererseits einzusetzen, wobei die Segmente derart dimensioniert sind, dass sie die erforderliche Relativdrehbarkeit unter Beibehalt des Verzahnungseingriffs zulassen.

## Patentansprüche

1. Hybridantriebsmodul, umfassend eine Elektromaschine (150) mit einer Statoranordnung (152) und einer mit einer Drehschwingungsdämpfungsanordnung (28) gekoppelten Rotoranordnung (154), wobei die Drehschwingungsdämpfungsanordnung (28) einen Eingangsbereich (52) und einen Ausgangsbereich (82) umfasst, wobei zwischen dem Eingangsbereich (52) und dem Ausgangsbereich (82) ein erster Drehmomentübertragungsweg (46) und parallel dazu ein zweiter Drehmomentübertragungsweg (48) sowie eine Kopplungsanordnung (50) zur Überlagerung der über die Drehmomentübertragungswege (46, 48) geleiteten Drehmomente vorgesehen sind, wobei die Drehschwingungsdämpfungsanordnung (28) ferner wenigstens im ersten Drehmomentübertragungsweg (46) eine Phasenschieberanordnung (56) umfasst zur Erzeugung einer Phasenverschiebung von über den ersten Drehmomentübertragungsweg (46) geleiteten Drehungleichförmigkeiten bezüglich über den zweiten Drehmomentübertragungsweg geleiteten Drehungleichförmigkeiten, **dadurch gekennzeichnet, dass** der Ausgangsbereich (82) ein Schwingungssystem (90) mit einer Primärseite (94) und einer gegen die Wirkung einer Federanordnung (98) bezüglich der Primärseite (94) drehbaren Sekundärseite (96) umfasst.

2. Hybridantriebsmodul nach Anspruch 1, **dadurch gekennzeichnet, dass** die Rotoranordnung (154) an den Eingangsbereich (52) der Drehschwingungsdämpfungsanordnung (28) angekoppelt ist.

3. Hybridantriebsmodul nach Anspruch 1, **dadurch gekennzeichnet, dass** die Rotoranordnung (154) an den Ausgangsbereich (82) der Drehschwingungsdämpfungsanordnung (28) angekoppelt ist.

4. Hybridantriebsmodul nach einem der Ansprüche 1, 2 oder 3, **dadurch gekennzeichnet, dass** die Phasenschieberanordnung (56) ein Schwingungssystem (66) mit einer Primärseite (60) und einer gegen die Wirkung einer Federanordnung (64, 64') bezüglich der Primärseite (60) um eine Drehachse (A) drehbaren Sekundärseite (62; 62') umfasst.

5. Hybridantriebsmodul nach einem der Ansprüche 1 bis 4, **dadurch gekennzeichnet, dass** eine um eine Drehachse (A) drehbare, mit einem Fluid gefüllte oder füllbare und wenigstens die Kopplungsanordnung(50) umschließende Gehäuseanordnung (30) vorgesehen ist.

6. Hybridantriebsmodul nach Anspruch 5, **dadurch gekennzeichnet, dass** eine mit der Gehäuseanordnung (30) um die Drehachse (A) drehbare erste Reibflächenformation (166) und eine mit der ersten Reibflächenformation (166) in Reibeingriff bringbare und mit einem Abtriebsorgan (44) um die Drehachse (A) drehbare zweite Reibflächenformation (170) vorgesehen sind.

7. Hybridantriebsmodul nach einem der Ansprüche 5 oder 6, **dadurch gekennzeichnet, dass** die Gehäuseanordnung (30) eine Antriebsformation (36) zum Antreiben einer Fluidpumpe zum Fördern von Fluid in die Gehäuseanordnung (30) umfasst.

8. Hybridantriebsmodul nach einem der Ansprüche 5 bis 7 **dadurch gekennzeichnet, dass** das Abtriebsorgan (44) eine mit einer Abtriebswelle (20), vorzugsweise Getriebeeingangswelle (20), zur gemeinsamen Drehung um die Drehachse (A) gekoppelte oder koppelbare Abtriebsnabe (44) umfasst.

9. Hybridantriebsmodul nach einem der Ansprüche 1 bis 8, **dadurch gekennzeichnet, dass** die Kopplungsanordnung (50) eine Planetengetriebeanordnung (68) umfasst.

10. Hybridantriebsmodul nach Anspruch 9, **dadurch gekennzeichnet, dass** die Planetengetriebeanordnung (68) einen an den zweiten Drehmomentübertragungsweg (48) angebundenen Planetenradträger (70) mit einer Mehrzahl von daran drehbar getragenen Planetenrädern (72) umfasst.

11. Hybridantriebsmodul nach Anspruch 10, **dadurch gekennzeichnet, dass** die Planetengetriebeanordnung (68) eine an den ersten Drehmomentübertragungsweg (46) angebundene erste Koppelradanordnung (78; 78') in Kämmeingriff mit den Planetenrädern (72) und eine an den Ausgangsbereich (82) angebundene zweite Koppelradanordnung (80; 80') in Kämmeingriff mit den Planetenrädern (72) umfasst.

12. Hybridantriebsmodul nach Anspruch 11, **dadurch gekennzeichnet, dass** die erste Koppelradanordnung (78; 78') in Verbindung mit den Planetenrädern (72) und die zweite Koppelradanordnung (80; 80') in Verbindung mit den Planetenrädern (72) zueinander unterschiedliche Übersetzungsverhältnisse bereitstellen.

13. Hybridantriebsmodul nach einem der Ansprüche 11 bis 12, **dadurch gekennzeichnet, dass** die erste Koppelradanordnung (78) und die zweite Koppelradanordnung (80) jeweils eine Hohlradanordnung (78, 80) umfassen.

14. Hybridantriebsmodul nach einem der Ansprüche 11 bis 12, **dadurch gekennzeichnet, dass** die erste Koppelradanordnung (78') und die zweite Koppelradanordnung (80') jeweils eine Sonnenradanordnung (78', 80') umfasst.

15. Hybridantriebsmodul nach einem der Ansprüche 1 bis 14, **dadurch gekennzeichnet, dass** das Schwingungssystem (66) oder/und das weitere Schwingungssystem (90) wenigstens zwei zueinander seriell angeordnete Schwingungsdämpfer (58, 58') jeweils mit einer Primärseite (60, 60') und einer bezüglich dieser drehbaren Sekundärseite (62, 62') umfasst.

16. Hybridantriebsmodul nach einem der Ansprüche 1 bis 15, **dadurch gekennzeichnet, dass** das Schwingungssystem (66) oder/und das weitere Schwingungssystem (90) wenigstens zwei zueinander parallel wirksame Schwingungsdämpfer jeweils mit einer Primärseite und einer bezüglich dieser drehbaren Sekundärseite umfasst.

17. Hybridantriebsmodul nach einem der Ansprüche 1 bis 16, **dadurch gekennzeichnet, dass** das Schwingungssystem (66) oder/und das weitere Schwingungssystem (90) eine drehzahladaptive Schwingungsdämpfungsanordnung (89) mit wenigstens einer in Umfangsrichtung aus einer Grundlage auslenkbaren und dabei ihren Abstand zur Drehachse (A) verändernde Auslenkungsmasse umfasst.

18. Hybridantriebsmodul nach einem der Ansprüche 1 bis 17, **dadurch gekennzeichnet, dass** das Schwingungssystem (66) der Phasenschieberanordnung (56) oder/und das Schwingungssystem (90) eine Festfrequenz-Schwingungsdämpfungsanordnung (89) mit wenigstens einer gegen die Wirkung einer Rückstellfederanordnung (116) auslenkbaren Schwingungsmasse (114) umfasst.

19. Hybridantriebsmodul nach einem der Ansprüche 1 bis 18, **dadurch gekennzeichnet, dass** dem Schwingungssystem (66) der Phasenschieberanordnung (56) oder/und das Schwingungssystem (90) eine einer Relativdrehung zwischen Primärseite (60, 94) und Sekundärseite (62, 96; 62') desselben entgegenwirkende Reibungsdämpfungsanordnung (85, 85', 100) zugeordnet ist.

## Claims

1. Hybrid drive module comprising an electric machine (150) with a stator arrangement (152) and a rotor arrangement (154) which is coupled to a rotary oscillation-damping arrangement (28), wherein the rotary oscillation-damping arrangement (28) comprises an input region (52) and an output region (82), wherein a first torque-transmitting path (46) is provided between the input region (52) and the output region (82), and parallel thereto a second torque-transmitting path (48) and a coupling arrangement (50) for superimposing the torques conducted via the torque-transmitting paths (46, 48) are provided, wherein the rotary oscillation-damping arrangement (28) also has, at least in the first torque-transmitting path (46), a phase shifter arrangement (56) for generating a phase shift of rotational non-uniformities, conducted via the first torque-transmitting path (46), with respect to rotational non-uniformities conducted via the second torque-transmitting path, **characterized in that** the output region (82) comprises an oscillation system (90) with a primary side (94) and a secondary side (96) which can rotate with respect to the primary side (94), counter to the effect of a spring arrangement (98).

2. Hybrid drive module according to Claim 1, **characterized in that** the rotor arrangement (154) is coupled to the input region (52) of the rotary oscillation-damping arrangement (28).

3. Hybrid drive module according to Claim 1, **characterized in that** the rotor arrangement (154) is coupled to the output region (82) of the rotary oscillation-damping arrangement (28).

4. Hybrid drive module according to one of Claims 1, 2, and 3, **characterized in that** the phase shifter arrangement (56) comprises an oscillation system (66) with a primary side (60) and a secondary side (62; 62') which can rotate about a rotational axis (A) with respect to the primary side (60), counter to the effect of a spring arrangement (64; 64, 64').

5. Hybrid drive module according to one of Claims 1 to 4, **characterized in that** a housing arrangement (30) which can rotate about a rotational axis (A) and, is filled or can be filled with a fluid and encloses at least the coupling arrangement (50) is provided.

6. Hybrid drive module according to Claim 5, **characterized in that** a first friction face structure (166) which can rotate with the housing arrangement (30) about the rotational axis (A) and a second friction face structure (170) which can be placed in frictional engagement with the first friction face structure (166) and can rotate with an output element (44) about the rotational axis (A) are provided.

7. Hybrid drive module according to one of Claims 5 and 6, **characterized in that** the housing arrangement (30) comprises a drive structure (36) for driving a fluid pump for feeding fluid into the housing arrangement (30).

8. Hybrid drive module according to one of Claims 5 to 7, **characterized in that** the output element (44) comprises an output hub (44) which is coupled or can be coupled to an output shaft (20), preferably a transmission input shaft (20), for common rotation about the rotational axis (A).

9. Hybrid drive module according to one of Claims 1 to 8, **characterized in that** the coupling arrangement (50) comprises a planetary gear mechanism arrangement (68) .

10. Hybrid drive module according to Claim 9, **characterized in that** the planetary gear mechanism arrangement (68) comprises a planetary gear carrier (70) which is connected to the second torque-transmitting path (48) and has a multiplicity of planetary gears (72) which are rotatably mounted thereon.

11. Hybrid drive module according to Claim 10, **characterized in that** the planetary gear mechanism arrangement (68) comprises a first coupling gear arrangement (78; 78'), which is connected to the first torque-transmitting path (46) and is in meshing engagement with the planetary gears (72), and a second coupling gear arrangement (80; 80') which is connected to the output region (82) and is in meshing engagement with the planetary gears (72).

12. Hybrid drive module according to Claim 11, **characterized in that** the first coupling gear arrangement (78; 78') in conjunction with the planetary gears (72), and the second coupling gear arrangement (80; 80') in conjunction with the planetary gears (72), make available different transmission ratios from one another.

13. Hybrid drive module according to either of Claims 11 and 12, **characterized in that** the first coupling gear arrangement (78) and the second coupling gear arrangement (80) each comprise a ring gear arrangement (78, 80).

14. Hybrid drive module according to either of Claims 11 and 12, **characterized in that** the first coupling gear arrangement (78') and the second coupling gear arrangement (80') each comprise a sun gear arrangement (78', 80').

15. Rotary oscillation-damping arrangement according to one of Claims 1 to 14, **characterized in that** the oscillation system (66) and/or the further oscillation system (90) comprise/comprises at least two oscillation dampers (58, 58') which are arranged in a serial fashion with respect to one another and each have a primary side (60, 60') and a secondary side (62, 62') which is rotatable with respect to the latter.

16. Hybrid drive module according to one of Claims 1 to 15, **characterized in that** the oscillation system (66) and/or the further oscillation system (90) comprise/comprises at least two oscillation dampers which are effective in parallel with one another and each have a primary side and a secondary side which is rotatable with respect to the latter.

17. Hybrid drive module according to one of Claims 1 to 16, **characterized in that** the oscillation system (66) and/or the further oscillation system (90) comprise/comprises a rotational-speed-adaptative oscillation-damping arrangement (89) with at least one deflection mass which can be deflected from its basic position in the circumferential direction and in the process changes its distance from the rotational axis (A) .

18. Hybrid drive module according to one of Claims 1 to 17, **characterized in that** the oscillation system (66) of the phase shifter arrangement (56) and/or the oscillation system (90) comprise/comprises a fixed-frequency oscillation-damping arrangement (89) with at least one oscillation mass (114) which can be deflected counter to the effect of a resetting spring arrangement (116) .

19. Hybrid drive module according to one of Claims 1 to 18, **characterized in that** the oscillation system (66) of the phase shifter arrangement (56) and/or the oscillation system (90) are/is assigned a friction-damping arrangement (85, 85', 100) which counteracts a relative rotation between the primary side (60, 94) and the secondary side (62, 96; 62') of said oscillation system (66) or further oscillation system (90).

## Revendications

1. Module d'entraînement hybride, comportant une machine électrique (150) pourvue d'un agencement de stator (152) et d'un agencement de rotor (154) accouplé à un agencement d'amortissement de vibrations de torsion (28), l'agencement d'amortissement de vibrations de torsion (28) comportant une région d'entrée (52) et une région de sortie (82), un premier chemin de transmission de couple (46) et parallèlement à celui-ci un deuxième chemin de transmission de couple (48) ainsi qu'un agencement d'accouplement (50) pour la superposition des couples guidés par les chemins de transmission de couple (46, 48) étant prévus entre la région d'entrée (52) et la région de sortie (82), l'agencement d'amortissement de vibrations de torsion (28) comportant en outre au moins dans le premier chemin de transmission de couple (46) un agencement de déphaseur (56) pour produire un déphasage d'irrégularités de rotation guidées par le biais du premier chemin de transmission de couple (46) par rapport à des irrégularités de rotation guidées par le biais du deuxième chemin de transmission de couple, **caractérisé en ce que** la région de sortie (82) comporte un système de vibrations (90) pourvu d'un côté primaire (94) et d'un côté secondaire (96) pouvant tourner par rapport au côté primaire (94) à l'encontre de l'action d'un agencement de ressort (98).

2. Module d'entraînement hybride selon la revendication 1, **caractérisé en ce que** l'agencement de rotor (154) est accouplé à la région d'entrée (52) de l'agencement d'amortissement de vibrations de torsion (28).

3. Module d'entraînement hybride selon la revendication 1, **caractérisé en ce que** l'agencement de rotor (154) est accouplé à la région de sortie (82) de l'agencement d'amortissement de vibrations de torsion (28).

4. Module d'entraînement hybride selon l'une quelconque des revendications 1, 2 ou 3, **caractérisé en ce que** l'agencement de déphaseur (56) comporte un système de vibrations (66) pourvu d'un côté primaire (60) et d'un côté secondaire (62 ; 62') pouvant tourner autour d'un axe de rotation (A) par rapport au côté primaire (60) à l'encontre de l'action d'un agencement de ressort (64 ; 64').

5. Module d'entraînement hybride selon l'une quelconque des revendications 1 à 4, **caractérisé en ce qu'**un agencement de boîtier (30) pouvant tourner autour d'un axe de rotation (A), rempli ou pouvant être rempli d'un fluide et entourant au moins l'agencement d'accouplement (50) est prévu.

6. Module d'entraînement hybride selon la revendication 5, **caractérisé en ce qu'**une première formation de surface de friction (166) pouvant tourner avec l'agencement de boîtier (30) autour de l'axe de rotation (A) et une deuxième formation de surface de friction (170) pouvant être amenée en engagement par friction avec la première formation de surface de friction (166) et pouvant tourner avec un organe de sortie (44) autour de l'axe de rotation (A) sont prévues.

7. Module d'entraînement hybride selon l'une quelconque des revendications 5 ou 6, **caractérisé en ce que** l'agencement de boîtier (30) comporte une formation d'entraînement (36) pour l'entraînement d'une pompe à fluide pour refouler du fluide dans l'agencement de boîtier (30).

8. Module d'entraînement hybride selon l'une quelconque des revendications 5 à 7, **caractérisé en ce que** l'organe de sortie (44) comporte un moyeu de sortie (44) accouplé ou pouvant être accouplé à un arbre de sortie (20), de préférence à l'arbre d'entrée de transmission (20), en vue de la rotation en commun autour de l'axe de rotation (A) .

9. Module d'entraînement hybride selon l'une quelconque des revendications 1 à 8, **caractérisé en ce que** l'agencement d'accouplement (50) comporte un agencement de transmission planétaire (68).

10. Module d'entraînement hybride selon la revendication 9, **caractérisé en ce que** l'agencement de transmission planétaire (68) comporte un porte-planétaire (70) relié au deuxième chemin de transmission de couple (48) et présentant une pluralité de roues planétaires (72) montées à rotation sur celui-ci.

11. Module d'entraînement hybride selon la revendication 10, **caractérisé en ce que** l'agencement de transmission planétaire (68) comporte un premier agencement de roue d'accouplement (78 ; 78'), relié au premier chemin de transmission de couple (46), en engrènement avec les roues planétaires (72) et un deuxième agencement de roue d'accouplement (80 ; 80'), relié à la région de sortie (82), en engrènement avec les roues planétaires (72).

12. Module d'entraînement hybride selon la revendication 11, **caractérisé en ce que** le premier agencement de roue d'accouplement (78 ; 78') en association avec les roues planétaires (72) et le deuxième agencement de roue d'accouplement (80 ; 80') en association avec les roues planétaires (72) produisent des rapports de démultiplication différents les uns des autres.

13. Module d'entraînement hybride selon l'une quelconque des revendications 11 à 12, **caractérisé en ce que** le premier agencement de roue d'accouplement (78) et le deuxième agencement de roue d'accouplement (80) comportent respectivement un agencement de couronne (78, 80).

14. Module d'entraînement hybride selon l'une quelconque des revendications 11 à 12, **caractérisé en ce que** le premier agencement de roue d'accouplement (78') et le deuxième agencement de roue d'accouplement (80') comportent respectivement un agencement de roue solaire (78', 80').

15. Module d'entraînement hybride selon l'une quelconque des revendications 1 à 14, **caractérisé en ce que** le système de vibrations (66) et/ou le système de vibrations (90) supplémentaire comporte(nt) au moins deux amortisseurs de vibrations (58, 58') disposés en série les uns par rapport aux autres et pourvus respectivement d'un côté primaire (60, 60') et d'un côté secondaire (62, 62') pouvant tourner par rapport à celui-ci.

16. Module d'entraînement hybride selon l'une quelconque des revendications 1 à 15, **caractérisé en ce que** le système de vibrations (66) et/ou le système de vibrations (90) supplémentaire comporte(nt) au moins deux amortisseurs de vibrations agissant parallèlement les uns aux autres et pourvus respectivement d'un côté primaire et d'un côté secondaire pouvant tourner par rapport à celui-ci.

17. Module d'entraînement hybride selon l'une quelconque des revendications 1 à 16, **caractérisé en ce que** le système de vibrations (66) et/ou le système de vibrations (90) supplémentaire comporte(nt) un agencement d'amortissement de vibrations adapté à la vitesse de rotation (89) pourvu d'au moins une masse de déviation pouvant être déviée dans la direction périphérique à partir d'une position de base et dont la distance par rapport à l'axe de rotation (A) varie en l'occurrence.

18. Module d'entraînement hybride selon l'une quelconque des revendications 1 à 17, **caractérisé en ce que** le système de vibrations (66) de l'agencement de déphaseur (56) et/ou le système de vibrations (90) comporte(nt) un agencement d'amortissement de vibrations de fréquence fixe (89) comprenant au moins une masse oscillante (114) pouvant être déviée à l'encontre de l'action d'un agencement de ressort de rappel (116).

19. Module d'entraînement hybride selon l'une quelconque des revendications 1 à 18, **caractérisé en ce qu'**au système de vibrations (66) de l'agencement de déphaseur (56) et/ou au système de vibrations (90) est associé un agencement d'amortissement par friction (85, 85', 100) s'opposant à une rotation relative entre le côté primaire (60, 94) et le côté secondaire (62, 96 ; 62') de celui-ci.
